# EUROPEAN PATENT APPLICATION

(11) **EP 4 769 203 A1**
(43) Date of publication of application: **01.07.2026**
(21) Application number: 24929993.4
(22) Date of filing: 18.03.2024
(51) Int. Cl.: G06F 40/166

(54) **DISPLAY METHOD AND RELATED DEVICE**

(71) Applicant: Honor Device Co., Ltd., Shenzhen 518040 (CN)
(72) Inventor: MEN, Songchen, Shenzhen, Guangdong 518040 (CN)
(74) Representative: Goddar, Heinz J.
(86) International application number: PCT/CN2024/082177
(87) International publication number: WO 2025/194303

(57) **Abstract**

This application discloses a display method and a related device. According to the method, in a recording process, after a user may triggers editing of recognized text, an electronic device may place newly obtained ASR data into a queue, and process the ASR data in the queue after the user triggers the end of editing. It can be understood that, after the user triggers the end of editing, the electronic device can still continuously obtain ASR data. In this case, the electronic device may first process the ASR data in the queue, and process, after processing of all the ASR data in the queue is completed, ASR data that is newly obtained by the electronic device after the user triggers the end of editing. By using the method, the electronic device can implement editing of recognized text in an ASR process without losing user-edited content and content obtained through speech recognition in an editing process.

## Description

### TECHNICAL FIELD

This application relates to the field of terminal technologies, and in particular, to a display method and a related device.

### BACKGROUND

A speech recognition technology, also referred to as automatic speech recognition (Automatic Speech Recognition, ASR), is to convert lexical content of a human speech into a computer-readable input (for example, a keystroke, binary code, or a character sequence). At present, ASR has been widely used in various scenarios such as office, entertainment, and life, and provides great convenience for people. For example, an electronic device may convert audio data collected in a recording process into text through ASR. However, in this process, the electronic device cannot respond to an editing operation of a user.

### SUMMARY

This application provides a display method and a related device. According to the method, in a recording process of an electronic device, a user may trigger editing; and after the user triggers the editing, the electronic device may place newly obtained ASR data into a queue, and process the ASR data in the queue after the user ends the editing. By using the method, the electronic device can implement editing of recognized text in an ASR process without losing user-edited content and content obtained through speech recognition in an editing process.

According to a first aspect, this application provides a display method. The method can be applied to a first device (that is, an electronic device in this application). The method may include: The electronic device may display a first interface, where the first interface includes a first control. The electronic device displays a second interface in response to a first operation performed on the first control, and the electronic device may start recording after the first operation is performed. The electronic device may obtain, in a first time period, first audio data obtained by recording, where first text content corresponding to the first audio data may be displayed in a first display area of the second interface, and the first display area does not include a cursor in the first time period. After the first time period, the cursor may be displayed in the first display area in response to a second operation performed on the first display area. The method may further include: The electronic device may receive an editing operation after the second operation is performed, where the first text content modified by performing the editing operation may be displayed in the first display area. After the second operation is performed, the electronic device may obtain second audio data obtained by recording, where second text content corresponding to the second audio data is not displayed in the first display area.

The electronic device may make recording and recognize audio data obtained by recording, to obtain corresponding text content. The text content may be displayed in a recognized text display area (for example, the first display area). It can be understood that in a recording process, the electronic device may update the text content displayed in the recognized text display area. In the solution provided in this application, when making recording and enabling a speech-to-text functionality, the electronic device may receive an editing operation performed by a user on the recognized text display area. In a process of receiving the editing operation of the user, the electronic device may modify the text content in the recognized text display area based on the editing operation. In addition, text content newly recognized in the process of receiving the editing operation of the user is not displayed in the recognized text display area. This can avoid a loss of user-edited content due to addition of the newly recognized text content. By using the method, the electronic device can ensure that ASR and user editing do not interfere with each other: User editing does not cause a loss of ASR data obtained by the electronic device, and processing of the ASR data does not cause a loss of the user-edited content.

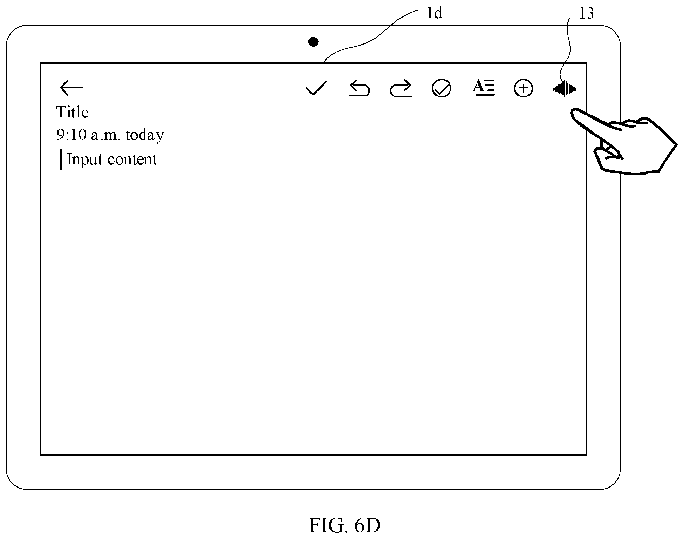

In some embodiments of this application, the first interface may be a new note interface (for example, a new note interface 1d shown in FIG. 6D), the first control may be an add recording control (for example, an add recording control 13 shown in FIG. 6D), and the first operation may be a user operation of tapping the add recording control.

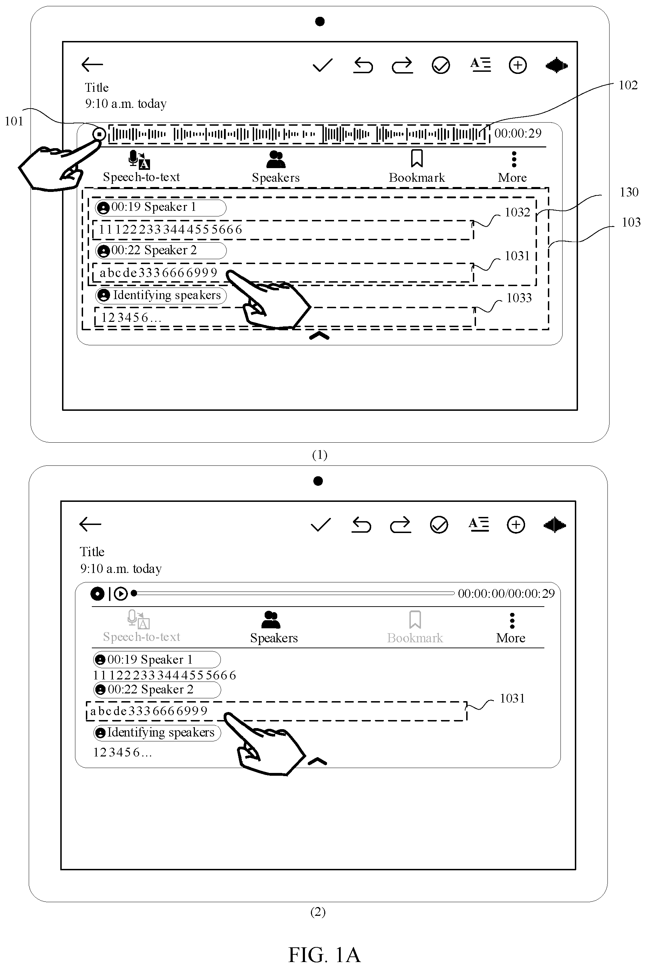

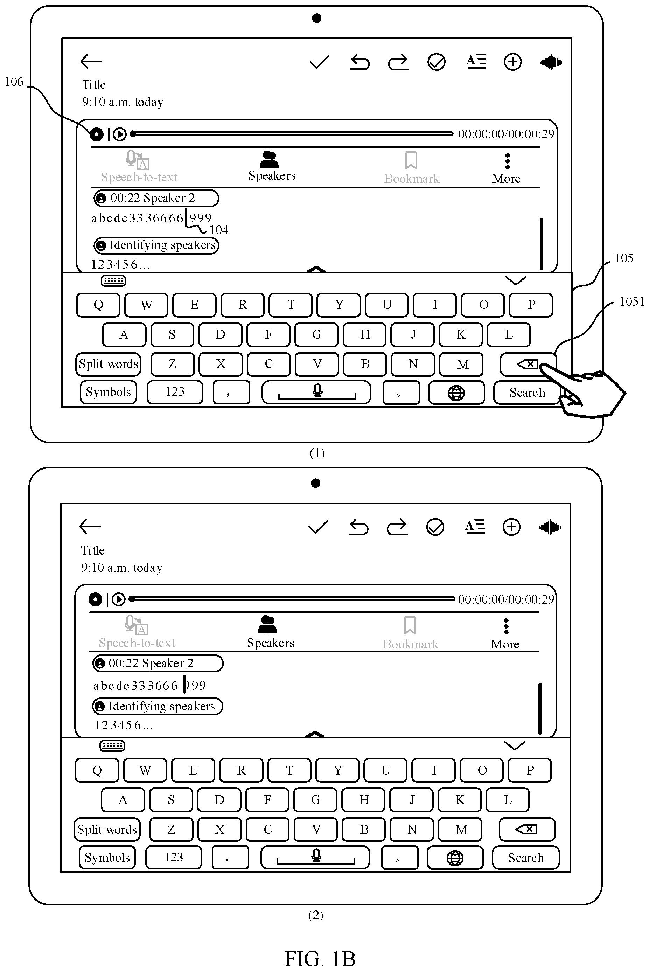

In some embodiments of this application, the first interface may be a note interface containing an added recording, for example, a user interface shown in (2) in FIG. 1A. The first control may be a resume recording control, for example, a resume recording control 106 shown in (2) in FIG. 1A, and (1) and (2) in FIG. 1B. The first operation may be a user operation of tapping the resume recording control.

Optionally, the electronic device may display the second interface after receiving the first operation performed on the first control. Optionally, the electronic device may detect the first operation performed on the first control, and the electronic device may display the second interface in response to the first operation.

In some embodiments of this application, the electronic device may start recording after displaying the second interface. In some other embodiments of this application, the electronic device may start recording when displaying the second interface. In some other embodiments of this application, the electronic device may display the second interface after starting recording.

It can be understood that the second interface in this application can be understood as a user interface with variable content, that is, content included in the second interface may change.

In some embodiments of this application, the electronic device may start recording after displaying the second interface. In this case, in response to the first operation performed on the first control, the second interface initially displayed by the electronic device does not include text content (or referred to as recognized text content) corresponding to audio data obtained by recording. Instead, after recording starts, the text content corresponding to the audio data obtained by recording is displayed in a corresponding display area (for example, the first display area) of the second interface.

In some embodiments of this application, the electronic device may display the second interface after starting recording. In this case, in response to the first operation performed on the first control, the second interface initially displayed by the electronic device may include text content corresponding to audio data obtained by recording. In addition, as recording duration increases, the text content that is corresponding to the audio data obtained by recording and that is displayed in a corresponding display area (for example, the first display area) of the second interface may change.

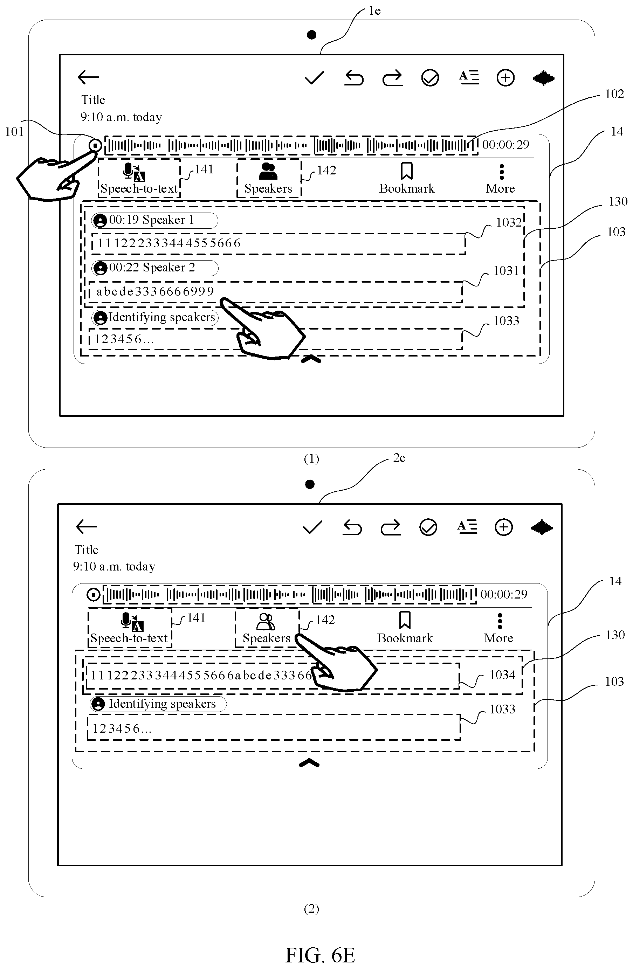

In some embodiments of this application, the second interface may be user interfaces shown in FIG. 6E to FIG. 6J.

In some embodiments of this application, the first display area may be the recognized text display area (for example, a recognized text display area 130), and can be understood as a display area corresponding to a final result obtained through speech recognition within a period of time (for example, the first time period). It can be understood that, for the final result, refer to specific related descriptions below. Details are not described herein in this application. In a possible implementation, the first display area may be specifically a display area that is corresponding to a speaker (for example, a second speaker text display area 1031) and that is in the recognized text display area.

In some embodiments of this application, as shown in (1) in FIG. 6E, the first time period may be from the start of a recording to a 29^{th} second of the recording. In this case, the first audio data may be audio data obtained by recording from the start of the recording to the 29^{th} second of the recording. Correspondingly, the first text content may include "111222333444555666" in a first speaker text display area 1032 and "abcde3336666999" in the second speaker text display area 1031.

In some embodiments of this application, as shown in (1) in FIG. 6E, the first time period may be from a 22^{nd} second after the start of a recording to a 29^{th} second of the recording. In this case, the first audio data may be audio data obtained by recording from the 22^{nd} second of the recording to the 29^{th} second of the recording. Correspondingly, the first text content may include "abcde3336666999" in the second speaker text display area 1031.

In some embodiments of this application, as shown in (1) in FIG. 6E, the second operation may be a user operation of tapping the second speaker text display area 1031.

In some embodiments of this application, the second operation may be a user operation of tapping an all-speaker text display area 1034.

Optionally, after the electronic device receives the second operation performed on the first display area, the cursor may be displayed in the first display area. Optionally, the electronic device may detect the second operation performed on the first display area, and the cursor may be displayed in the first display area in response to the second operation.

In some embodiments of this application, as shown in (1) in FIG. 1B, the cursor displayed in the first display area may be a cursor 104.

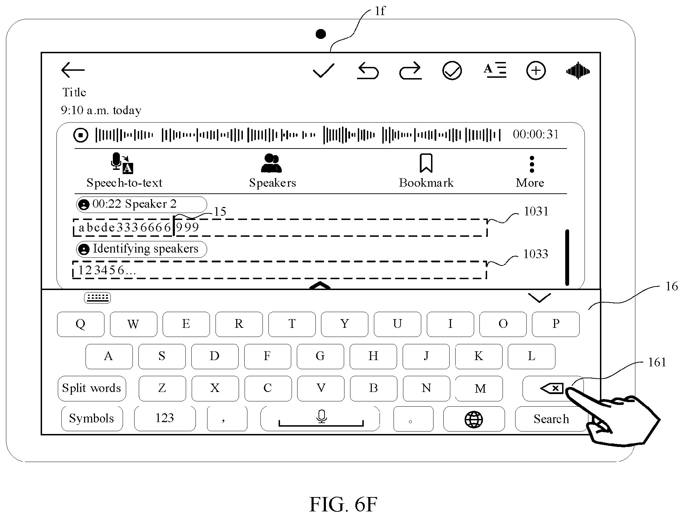

In some embodiments of this application, as shown in FIG. 6F, the cursor displayed in the first display area may be a cursor 15.

In some embodiments of this application, that the cursor may be displayed in the first display area can be understood as follows: The electronic device may display the cursor in the first display area, or have the cursor displayed in the first display area.

It can be understood that a specific location at which the cursor is displayed in the first display area may be determined based on a specific location of the second operation.

In some embodiments of this application, that the electronic device receives an editing operation may specifically include: The electronic device receives a user operation of pressing a key in a keyboard. In some embodiments of this application, that the electronic device receives an editing operation may further specifically include: The electronic device receives a user operation of writing with a finger or a stylus in a handwriting input area. It can be understood that receiving an editing operation may further include other implementations. This is not specifically limited in this application.

In some embodiments of this application, the editing operation may specifically include adding text, deleting text, or another operation. This is not specifically limited in this application. It can be understood that the editing operation may relate to target edited text, an editing location, an editing manner, and edited content that are mentioned in the following step S307.

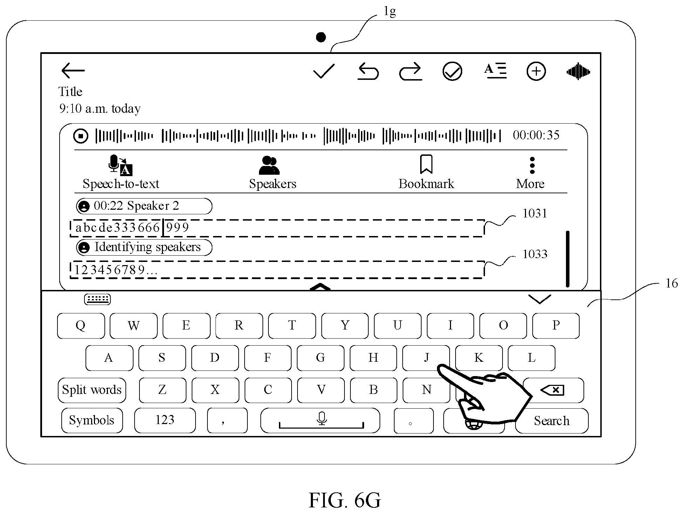

In some embodiments of this application, as shown in (1) in FIG. 6E, the first text content may include "abcde3336666999" in the second speaker text display area 1031. The editing operation may include deleting text "6" on a left side of the cursor 15 shown in FIG. 6F. The editing operation may further include adding text "888" to a left side of the cursor 15 shown in FIG. 6G. In this case, the modified first text content (or referred to as text content obtained by modifying the first text content) may be "abcde333666888999".

It can be understood that in the process of receiving the editing operation, the text content in the first display area may change accordingly. In some embodiments of this application, as shown in FIG. 6F to FIG. 6H, in the process of receiving the editing operation, the text content in the first display area may change from "abcde3336666999" to "abcde333666999", and then change from "abcde333666999" to "abcde333666888999".

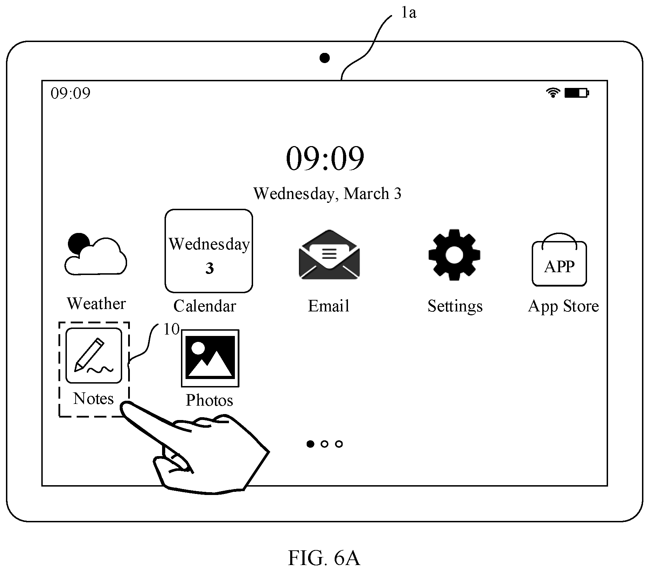

In some embodiments of this application, as shown in FIG. 6F to FIG. 6H, a second time period may be from a 31^{st} second after the start of a recording to a 40^{th} second of the recording. In this case, the second audio data may be audio data obtained by recording from the 31^{st} second of the recording to the 40^{th} second of the recording. Correspondingly, the second text content may include "1234567890", and "1234567890" is not displayed in the recognized text display area 130.

In some embodiments of this application, that first text content corresponding to the first audio data may be displayed in a first display area of the second interface can be understood as follows: The electronic device may display the first text content corresponding to the first audio data in the first display area of the second interface, or have the first text content corresponding to the first audio data displayed in the first display area of the second interface.

In some embodiments of this application, that the first text content modified by performing the editing operation may be displayed in the first display area can be understood as follows: The electronic device may display the first text content modified by performing the editing operation in the first display area, or have the first text content modified by performing the editing operation displayed in the first display area.

In some embodiments of this application, meanings represented by text, text content, and text data in this application are the same.

With reference to the first aspect, in a possible implementation, the second interface may include a second display area, and the second text content may be displayed in the second display area after the second operation is performed.

In the solution provided in this application, when making recording and enabling the speech-to-text functionality, the electronic device may receive an editing operation performed by the user on the recognized text display area. In a process of receiving the editing operation of the user, the electronic device may not add newly recognized text content to the recognized text display area. To be specific, the newly recognized text content may not be displayed in the recognized text display area, whereas the newly recognized text content may be displayed in an in-progress recognition text display area. In this way, in a user editing process, the electronic device may display, in another display area in time, text content corresponding to audio data obtained by recording in the editing process, so that the user can view newly recognized text in time in the editing process.

In some embodiments of this application, the second display area may be the in-progress recognition text display area (for example, an in-progress recognition text display area 1033), and can be understood as a display area corresponding to an intermediate result obtained through speech recognition within a period of time. It can be understood that, for the intermediate result, refer to specific related descriptions below. Details are not described herein in this application.

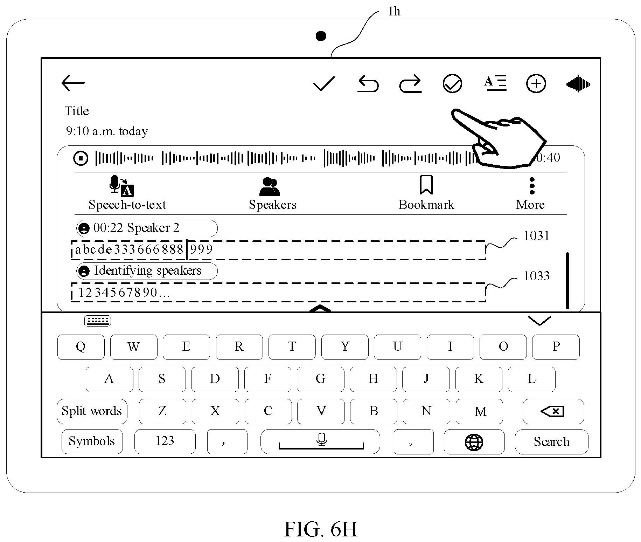

In some embodiments of this application, as shown in FIG. 6F to FIG. 6H, the second time period may be from the 31^{st} second after the start of the recording to the 40^{th} second of the recording. In this case, the second audio data may be audio data obtained by recording from the 31^{st} second of the recording to the 40^{th} second of the recording, and the second text content may include "1234567890". It should be noted that, as shown in FIG. 6H, after the second operation is performed, "1234567890" is not displayed in the recognized text display area 130, whereas "1234567890" is displayed in the in-progress recognition text display area 1033.

With reference to the first aspect, in a possible implementation, the method may further include: In response to an edit-exit event, the second text content and the modified first text content may be displayed in the first display area, and displaying the cursor in the first display area is skipped after the edit-exit event.

In the solution provided in this application, when making recording and enabling the speech-to-text functionality, the electronic device may receive an editing operation performed by the user on the recognized text display area. In a process of receiving the editing operation of the user, the electronic device may not add newly recognized text content to the recognized text display area until the user completes editing. This avoids a loss of user-edited content due to addition of the newly recognized text content in the process of receiving the user editing.

In some embodiments of this application, the edit-exit event may specifically include either of the following: An operation performed on a non-editing area is received, and duration for which an editing operation performed on the first display area is not received is greater than T1. That duration for which an editing operation performed on the first display area is not received is greater than T1 may specifically include: Duration for which a user operation is not received is greater than T1 (for details, refer to step S308).

In some embodiments of this application, according to the following descriptions, the non-editing area may include an area other than the recognized text display area and an area in which the keyboard is located.

In some embodiments of this application, the non-editing area may further include an area other than the recognized text display area and a handwriting area.

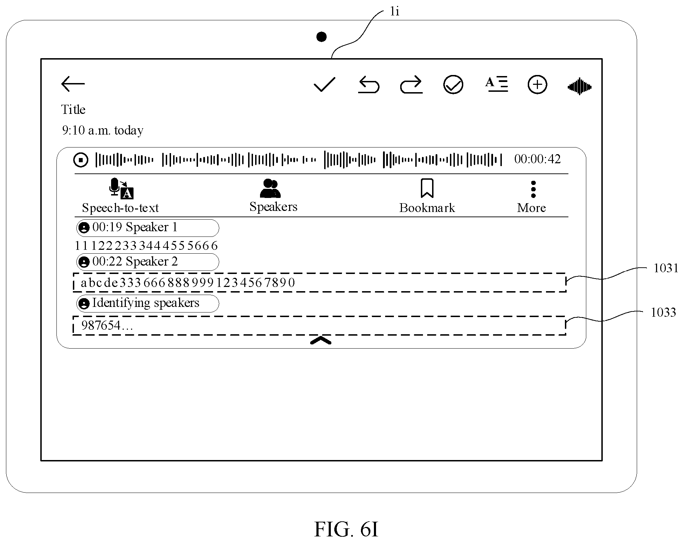

In some embodiments of this application, the edit-exit event may specifically include a user operation of tapping a blank area shown in FIG. 6H. In response to the user operation of tapping the blank area shown in FIG. 6H, as shown in FIG. 6I, the second text content "1234567890" and the modified first text content "abcde333666888999" are displayed in the second speaker text display area 1031.

With reference to the first aspect, in a possible implementation, in response to the first operation, the electronic device may start recording, and enable a speech-to-text functionality.

In the solution provided in this application, the electronic device may create a new note, or open a note that does not contain any recording. In response to a user operation of tapping the add recording control, the electronic device may start recording. When recording starts, the speech-to-text functionality has been enabled. In other words, after starting recording, the electronic device may obtain text content corresponding to audio data obtained by recording, and display the text content in a corresponding display area (for example, the first display area and the second display area). The user does not need to additionally tap a corresponding control (for example, a speech-to-text control 141) or use other manners to trigger the electronic device to enable the speech-to-text functionality.

With reference to the first aspect, in a possible implementation, the second interface may include a second control. That the electronic device starts recording after the first operation is performed may specifically include: The electronic device may start recording in response to the first operation. That the electronic device obtains, in a first time period, first audio data obtained by recording may specifically include: The electronic device may obtain the first audio data and the first text content in the first time period in response to a third operation performed on the second control.

In the solution provided in this application, the electronic device may display a note interface containing a recording, and resume recording. When recording is resumed, the speech-to-text functionality has not been enabled. In a process of resuming recording, the user may enable the speech-to-text functionality. After enabling the speech-to-text functionality, the electronic device may obtain text content corresponding to audio data obtained by recording, and display the text content on a display screen. In addition, after enabling the speech-to-text functionality, the electronic device may further receive an editing operation performed by the user on the recognized text display area. In a process of receiving the editing operation of the user, the electronic device may modify the text content in the recognized text display area based on the editing operation. In addition, text content newly recognized in the process of receiving the editing operation of the user is not displayed in the recognized text display area. This can avoid a loss of user-edited content due to addition of the newly recognized text content.

According to the foregoing descriptions, in some embodiments of this application, the first interface may be a note interface containing an added recording, for example, the user interface shown in (2) in FIG. 1A. The first control may be a resume recording control (for example, the resume recording control 106), and the first operation may be a user operation of tapping the resume recording control. In addition, in some embodiments of this application, the second control may be a speech-to-text control (for example, the speech-to-text control 141).

In the foregoing case, in a possible implementation, the electronic device may display the second interface in response to the first operation. In addition, the speech-to-text control in the second interface initially displayed by the electronic device is in an unselected state, and the initially displayed second interface does not include text content corresponding to audio data obtained by recording. In other words, the third operation performed on the second control can be understood as a user operation (for example, a tap operation) performed on the speech-to-text control that is in the unselected state. Further, in response to the user operation of tapping the speech-to-text control that is in the unselected state, the speech-to-text control in a selected state is displayed on the second interface, that is, the speech-to-text functionality is enabled. In this case, the electronic device can obtain audio data (namely, the first audio data) obtained by recording in the first time period, and can also obtain text content (namely, the first text content) corresponding to the audio data.

With reference to the first aspect, in a possible implementation, after obtaining the first audio data obtained by recording, the electronic device may send the first audio data to a second device (that is, a speech recognition server in this application). After sending the first audio data to the second device, the electronic device may receive a plurality of audio recognition results sent by the second device. Text in a first-type audio recognition result included in the plurality of audio recognition results may constitute the first text content, and the plurality of audio recognition results include a first recognition result. The electronic device may process the first recognition result after receiving the first recognition result, to obtain third text content. When the first recognition result is a first-type audio recognition result, the third text content may be displayed in the first display area, and the first text content may include the third text content. In contrast, when the first recognition result is a second-type audio recognition result, the third text content may replace content originally displayed in the second display area. To be specific, the third text content may be displayed in the second display area and replace the content originally displayed in the second display area. It should be noted that in a process of processing the first recognition result, a first flag is first content, and a first queue does not include the audio recognition results.

In the solution provided in this application, when making recording and enabling the speech-to-text functionality, the electronic device may obtain an audio recognition result corresponding to audio data obtained by recording, and determine, based on a type of the audio recognition result, whether text content is displayed in the first display area or the second display area. In this way, for different types of audio recognition results, the electronic device may display text content included in the audio recognition results in different display areas, to facilitate user viewing.

In some embodiments of this application, the audio recognition result may be a speech-to-text result mentioned below.

In some embodiments of this application, the first-type audio recognition result can be understood as a final result of speech recognition within a period of time, and the second-type audio recognition result can be understood as an intermediate result of speech recognition within a period of time.

In some embodiments of this application, the first-type audio recognition result may be a final-type speech-to-text result (or referred to as a speech-to-text result of a final type) mentioned below, and the second-type audio recognition result may be a part-type speech-to-text result (or referred to as a speech-to-text result of a part type) mentioned below.

It can be understood that after the electronic device sends the first audio data to the speech recognition server, the speech recognition server may recognize the first audio data to obtain the plurality of audio recognition results, and send the plurality of audio recognition results to the electronic device. It can be understood that the plurality of audio recognition results can be understood as audio recognition results corresponding to the first audio data. According to the foregoing descriptions, the electronic device may receive the audio recognition results corresponding to the first audio data. It should be noted that the electronic device may process and display the audio recognition results according to a receiving order of the audio recognition results.

It can be understood that the audio recognition results corresponding to the first audio data may include one or more first-type audio recognition results. In some embodiments of this application, the first-type audio recognition result in the audio recognition results corresponding to the first audio data may constitute the first text content according to a generation order (or referred to as the order in which the electronic device performs receiving), and the first text content is displayed in the first display area. In other words, the text content displayed in the first display area is obtained by splicing the first-type audio recognition result.

In some embodiments of this application, the first queue may be a queue mentioned below, the first flag may be a flag mentioned below, and the first content may be "false" mentioned below. Certainly, the first content may be alternatively represented in another manner. This is not limited in this application.

It can be understood that after receiving the first recognition result, the electronic device may determine whether the first flag is the first content and whether the queue is empty. When the first flag is the first content and the queue is empty, the electronic device may process the first recognition result, and display text obtained through processing on the display screen. For details of a process of processing and displaying the first recognition result by the electronic device, refer to step S203 to step S212. Details are not described herein in this application.

It can be understood that, that the third text content is displayed in the first display area may specifically include: The third text content may be spliced after the text content originally displayed in the first display area, to obtain spliced text content, and the spliced text content may be displayed in the first display area. It can be understood that the first text content may include the spliced text content, that is, the first text content may include the third text content and the text content that is originally displayed in the first display area. It can be understood that the foregoing splicing and displaying operations may also be performed on other first-type audio recognition results in the audio recognition results corresponding to the first audio data. For details, refer to the following descriptions.

For example, the audio recognition results corresponding to the first audio data include a plurality of first-type audio recognition results, and the first recognition result is a first-type audio recognition result. Text content originally displayed in the second speaker text display area 1031 is "abcde3336666", and the third text content may be "999". The electronic device may add "999" after "abcde3336666" to obtain "abcde3336666999", and "abcde3336666999" may be displayed in the second speaker text display area 1031. This is specifically shown in (1) in FIG. 6E.

It should be noted that in a process of receiving the plurality of audio recognition results corresponding to the first audio data, after receiving each of the plurality of audio recognition results, based on a type of the audio recognition result, the electronic device may determine whether to display text content included in the audio recognition result in the first display area or the second display area, instead of determining, one by one according to the receiving order after all of the plurality of audio recognition results are received, types of the audio recognition results and whether to display text content included in the audio recognition results in the first display area or the second display area.

With reference to the first aspect, in a possible implementation, the method may further include: in response to the first operation, creating the first queue and setting the first flag as the first content.

In the solution provided in this application, the electronic device may set a flag and a queue to ensure that ASR and user editing do not interfere with each other. Specifically, the electronic device may set the flag to indicate whether the user edits recognized text, and create the queue to facilitate temporary storage of an audio recognition result after the user triggers editing of the recognized text. This avoids impact of text content in the audio recognition result on user-edited content.

According to the foregoing descriptions, in some embodiments of this application, the first interface may be a new note interface (for example, the new note interface 1d shown in FIG. 6D), the first control may be an add recording control (for example, the add recording control 13 shown in FIG. 6D), and the first operation may be a user operation of tapping the add recording control. In this case, in response to the operation of tapping the add recording control, the electronic device may create the first queue and set the first flag as the first content.

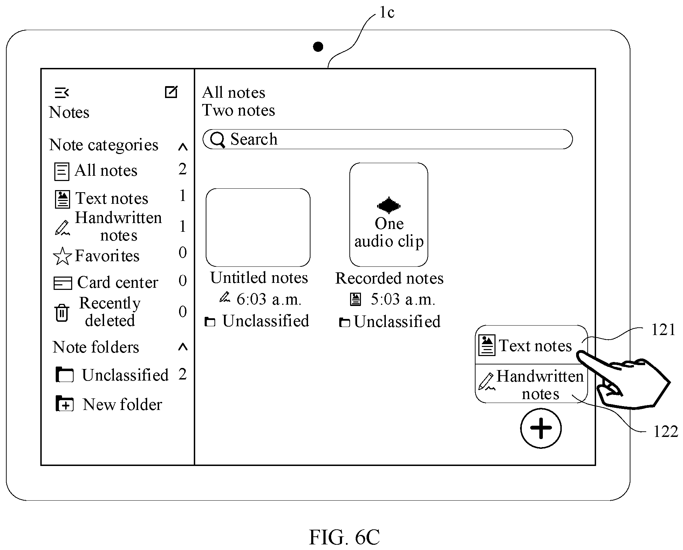

With reference to the first aspect, in a possible implementation, the first interface may be a note interface containing an added recording. In this case, before displaying the first interface, the electronic device may display a note creation interface (for example, a note creation interface 1c shown in FIG. 6C). The note creation interface may include an icon corresponding to a note containing a recording (for example, an icon corresponding to "recorded notes" shown in FIG. 6C). In response to a user operation of tapping the icon corresponding to the note containing the recording, the electronic device may create the first queue and set the first flag as the first content.

In the solution provided in this application, for a note containing an added recording, after the electronic device receives a user operation that triggers display of a user interface corresponding to the note containing the added recording, the electronic device may create a queue and set a flag, without a need to create a queue and set a flag after recording starts. This reduces occupied time.

With reference to the first aspect, in a possible implementation, after obtaining the second audio data obtained by recording, the electronic device may send the second audio data to the second device. After sending the second audio data to the second device, the electronic device may receive a plurality of audio recognition results sent by the second device, and process the plurality of audio recognition results to obtain the second text content. Each of the plurality of audio recognition results includes a part or all of the second text content. The first flag is second content in a process of receiving the plurality of audio recognition results sent by the second device and processing the plurality of audio recognition results. After the second audio data is sent to the second device and the plurality of audio recognition results sent by the second device are received, the first queue includes the plurality of audio recognition results received after the second audio data is sent to the second device, or the first queue includes a first-type audio recognition result in the plurality of audio recognition results received after the second audio data is sent to the second device.

In the solution provided in this application, when making recording and enabling the speech-to-text functionality, the electronic device may receive an editing operation performed by the user on the recognized text display area. In a process of receiving the editing operation of the user, the electronic device may modify recognized text. In addition, the electronic device may still obtain an audio recognition result corresponding to audio data obtained by recording, and place the audio recognition result into the queue. In this way, the electronic device does not need to still add newly recognized text content when modifying the recognized text content. This avoids a loss of user-edited content due to addition of the newly recognized text content.

In some embodiments of this application, the second content may be "true" mentioned below. Certainly, the second content may be alternatively represented in another manner. This is not limited in this application.

It can be understood that after the electronic device sends the second audio data to the speech recognition server, the speech recognition server may recognize the second audio data to obtain the plurality of audio recognition results, and send the plurality of audio recognition results to the electronic device. It can be understood that the plurality of audio recognition results can be understood as audio recognition results corresponding to the second audio data. According to the foregoing descriptions, the electronic device may receive the audio recognition results corresponding to the second audio data. It should be noted that in the process of receiving the editing operation of the user, the electronic device may process and display all or some of the audio recognition results according to a receiving order of the audio recognition results. In addition, the electronic device may place all of the audio recognition results into the queue or place the first-type audio recognition result in the audio recognition results into the queue.

It can be understood that after receiving the audio recognition results corresponding to the second audio data, the electronic device may determine whether the first flag is the first content. When the first flag is the second content, the electronic device may process the audio recognition results corresponding to the second audio data, and display text obtained through processing on the display screen. For details of a process of processing and displaying the audio recognition results corresponding to the second audio data by the electronic device, refer to related descriptions in step S214 to step S217 and Table 1. Details are not described herein in this application.

With reference to the first aspect, in a possible implementation, the plurality of audio recognition results received after the second audio data is sent to the second device include a second recognition result and a third recognition result, the second recognition result and the third recognition result are first-type audio recognition results, a receiving moment of the second recognition result is earlier than a receiving moment of the third recognition result, the second recognition result includes fourth text content, and the third recognition result includes fifth text content. That the electronic device receives a plurality of audio recognition results sent by the second device, and processes the plurality of audio recognition results to obtain the second text content may specifically include: The electronic device may receive the second recognition result, and may process the second recognition result after receiving the second recognition result, to obtain the fourth text content, where the fourth text content may be displayed in the second display area. The electronic device may receive the third recognition result, and may process the third recognition result after receiving the third recognition result, to obtain the fifth text content, where the fifth text content and the fourth text content constitute the second text content, and then the second text content is displayed in the second display area.

In the solution provided in this application, when making recording and enabling the speech-to-text functionality, the electronic device may receive an editing operation performed by the user on the recognized text display area. In a process of receiving the editing operation of the user, the electronic device may receive the plurality of audio recognition results corresponding to the second audio data, process the first-type audio recognition result in the plurality of audio recognition results according to the receiving order, and display text content obtained through processing in the second display area. In this way, in a user editing process, the user can also view, in the second display area, an accurate final result obtained through recognition within a period of time.

It should be noted that in the process of receiving the editing operation of the user, the electronic device may receive the plurality of audio recognition results corresponding to the second audio data, and after receiving each of the plurality of audio recognition results, based on a type of the audio recognition result, the electronic device may determine whether to display text content included in the audio recognition result in the second display area, instead of determining, one by one according to the receiving order after all of the plurality of audio recognition results are received, types of the audio recognition results and whether to display text content included in the audio recognition results in the second display area.

In some embodiments of this application, that the fifth text content and the fourth text content constitute the second text content may specifically include: The fifth text content is spliced after the fourth text content to form the second text content. As shown in FIG. 6F, the second display area may be the in-progress recognition text display area 1033, the fourth text content may be "123456", and "123456" is displayed in the in-progress recognition text display area 1033. As shown in FIG. 6G, the fifth text content may be "789", "789" may be spliced after "123456" to form "123456789", and "123456789" may be displayed in the in-progress recognition text display area 1033.

With reference to the first aspect, in a possible implementation, the plurality of audio recognition results received after the second audio data is sent to the second device may include a fourth recognition result and a fifth recognition result, a receiving moment of the fourth recognition result is earlier than a receiving moment of the fifth recognition result, the fourth recognition result may include sixth text content, and the fifth recognition result may include the second text content. That the electronic device receives a plurality of audio recognition results sent by the second device, and processes the plurality of audio recognition results to obtain the second text content may specifically include: The electronic device may receive the fourth recognition result, and may process the fourth recognition result after receiving the fourth recognition result, to obtain the sixth text content, where the sixth text content is displayed in the second display area. The electronic device may receive the fifth recognition result, and may process the fifth recognition result after receiving the fifth recognition result, to obtain the second text content, where the second text content replaces the sixth text content and is displayed in the second display area.

In the solution provided in this application, when making recording and enabling the speech-to-text functionality, the electronic device may receive an editing operation performed by the user on the recognized text display area. In a process of receiving the editing operation of the user, the electronic device may receive the plurality of audio recognition results corresponding to the second audio data, process some (a first-type audio recognition result or a second-type audio recognition result) or all of the plurality of audio recognition results according to the receiving order, and display text content obtained through processing in the second display area in an overwriting manner. In this way, in a user editing process, the user can also view, in the second display area, a result obtained through recognition within a period of time.

In some embodiments of this application, as shown in FIG. 6F, the second display area may be the in-progress recognition text display area 1033, the sixth text content may be "123456", and "123456" is displayed in the in-progress recognition text display area 1033. As shown in FIG. 6G, the second text content may be "123456789", and "123456789" replaces "123456" and is displayed in the in-progress recognition text display area 1033.

With reference to the first aspect, in a possible implementation, the fourth recognition result and the fifth recognition result may be first-type audio recognition results; the fourth recognition result and the fifth recognition result may be second-type audio recognition results; the fourth recognition result may be a first-type audio recognition result, and the fifth recognition result may be a second-type audio recognition result; or the fourth recognition result is a second-type audio recognition result, and the fifth recognition result may be a first-type audio recognition result.

In the solution provided in this application, regardless of whether the electronic device processes only the received first-type audio recognition result, processes only the received second-type audio recognition result, or processes all the received audio recognition results in the process of receiving the editing operation of the user, the electronic device may display text content obtained through processing in the second display area in an overwriting manner. In this way, the user can also view newly recognized text content in an editing process. In addition, this manner is simple in logic, easy to implement, and convenient to maintain.

With reference to the first aspect, in a possible implementation, after the first time period, the method may further include: The electronic device may set the first flag to the second content in response to the second operation. After the electronic device obtains the second text content, the method may further include: The electronic device may set the first flag as the first content in response to an edit-exit event.

In the solution provided in this application, the electronic device may set the first flag as the first content to indicate that the user is not editing the recognized text currently, and set the first flag as the second content to indicate that the user is editing the recognized text currently. In this way, the electronic device can determine, based only on specific content of the first flag, whether the user is editing the recognized text currently, and accordingly process the received audio recognition result by using different policies. This manner is simple and effective.

According to a second aspect, this application provides an electronic device. The electronic device includes one or more memories and one or more processors. The one or more memories are coupled to the one or more processors. The memory is configured to store computer program code. The computer program code includes computer instructions. The one or more processors invoke the computer instructions, so that the electronic device performs the method described in any one of the first aspect or the implementations of the first aspect.

According to a third aspect, this application provides a computer storage medium. The computer storage medium includes computer instructions. When the computer instructions are run on an electronic device, the electronic device is enabled to perform the method described in any one of the first aspect or the implementations of the first aspect.

According to a fourth aspect, an embodiment of this application provides a chip. The chip can be applied to an electronic device, and the chip includes one or more processors. The processor is configured to invoke computer instructions, so that the electronic device performs the method described in any one of the first aspect or the implementations of the first aspect.

In some embodiments of this application, a chip system may be an application processor (Application Processor, AP), or a system on chip (System on Chip, SoC) including an AP, the method described in any one of the first aspect or the implementations of the first aspect may be implemented by an AP, and the method described in any one of the second aspect or the implementations of the second aspect may be implemented by an AP.

In some other embodiments of this application, a chip system may include an AP and another module. The another module may be a modem processor (Modem, which may also referred to as a baseband processor).

According to a fifth aspect, an embodiment of this application provides a computer program product including instructions. When the computer program product is run on an electronic device, the electronic device is enabled to perform the method described in any one of the first aspect or the implementations of the first aspect.

It can be understood that the electronic device provided in the second aspect, the computer storage medium provided in the third aspect, the chip provided in the fourth aspect, and the computer program product provided in the fifth aspect are all configured to perform the method described in any one of the first aspect or the implementations of the first aspect. Therefore, for beneficial effects that can be achieved by the electronic device, the computer storage medium, the chip, and the computer program product, refer to the beneficial effects of any one of the possible implementations of the first aspect. Details are not described herein again.

### BRIEF DESCRIPTION OF DRAWINGS

FIG. 1A and FIG. 1B are diagrams of a group of user interfaces according to an embodiment of this application;
FIG. 2A and FIG. 2B are principle diagrams of implementing editing in a speech recognition process according to an embodiment of this application;
FIG. 3 is a diagram of a hardware structure of an electronic device according to an embodiment of this application;
FIG. 4 is a diagram of a software structure of an electronic device according to an embodiment of this application;
FIG. 5 is a diagram of an architecture of a speech recognition system according to an embodiment of this application;
FIG. 6A to FIG. 6J are diagrams of another group of user interfaces according to an embodiment of this application;
FIG. 7A to FIG. 7D are flowcharts of a display method according to an embodiment of this application;
FIG. 8 is a flowchart of another display method according to an embodiment of this application;
FIG. 9A to FIG. 9H are diagrams of enqueuing and dequeuing of speech-to-text results according to an embodiment of this application;
FIG. 10 is another principle diagram of implementing editing in a speech recognition process according to an embodiment of this application; and
FIG. 11 is a flowchart in which two threads jointly operate on an object according to an embodiment of this application.

### DESCRIPTION OF EMBODIMENTS

The following clearly and completely describes technical solutions in embodiments of this application with reference to accompanying drawings in embodiments of this application. In description of embodiments of this application, "/" represents "or" unless otherwise specified. For example, A/B may represent A or B. In this specification, "and/or" describes only an association relationship for describing associated objects, and represents that three relationships may exist. For example, A and/or B may represent the following three cases: Only A exists, both A and B exist, and only B exists. In addition, in the descriptions of embodiments of this application, "plurality" indicates two or more.

It should be understood that in the specification, claims, and accompanying drawings of this application, terms "first", "second", and the like are intended to distinguish between different objects but do not indicate a particular order. In addition, terms "include", "have", and any other variants thereof are intended to cover a non-exclusive inclusion. For example, processes, methods, systems, products, or devices that include a series of steps or units are not limited to the listed steps or units, but optionally further include unlisted steps or units, or optionally further include other steps or units inherent to these processes, methods, systems, products, or devices.

It should be understood that a term "user interface" in the specification, claims, and accompanying drawings of this application is a medium interface for performing interaction and information exchange between an application or an operating system and a user. A graphical user interface (Graphical User Interface, GUI) is a common form of user interface, and is a user interface that is related to a computer operation and that is displayed in a graphical manner. The graphical user interface may be an interface element displayed on a display screen of an electronic device, for example, an icon, a window, or a control. The control may include a visible interface element, for example, an icon, a button, a menu, a tab, a text box, a dialog box, a status bar, a navigation bar, or a widget (Widget).

An "embodiment" in this application means that specific features, structures, or characteristics described with reference to this embodiment may be included in at least one embodiment of this application. The phrase shown at various locations in this specification does not necessarily refer to a same embodiment, and is not an independent or optional embodiment exclusive from other embodiments. A person skilled in the art explicitly or implicitly understands that embodiments described in this application may be combined with other embodiments.

According to the foregoing descriptions, an electronic device may convert collected audio data (which can also be understood as speech data) into text through ASR. However, in this process, the electronic device cannot respond to an editing operation of a user.

**The following uses audio data-to-text (which may also be referred to as speech-to-text) in a notes application and editing as examples for description:**
After starting a notes application, in response to a user operation, an electronic device may create a note, make recording (that is, collect audio data) in the note, and obtain text converted (or recognized) from the collected audio data. At a 29^{th} second of the recording, the electronic device may display a user interface shown in (1) in FIG. 1A. The user interface shown in (1) in FIG. 1A may include a stop recording control 101 and a voiceprint waveform display area 102. The stop recording control 101 may be configured to trigger the electronic device to stop recording. The voiceprint waveform display area 102 may include a voiceprint waveform corresponding to the audio data collected by the electronic device. It can be understood that if the electronic device displays both the stop recording control 101 and the voiceprint waveform display area 102, it may indicate that the electronic device is making recording. The user interface shown in (1) in FIG. 1A may further include a speech recognition text display area 103. The speech recognition text display area 103 is configured to display text obtained by recognizing the collected audio data. The speech recognition text display area 103 may include a recognized text display area 130 and an in-progress recognition text display area 1033. The recognized text display area 130 may include recognized text, and the in-progress recognition text display area 1033 includes text that is being recognized. In some embodiments of this application, the recognized text display area 130 may include text display areas corresponding to different speakers, for example, a first speaker text display area 1032 and a second speaker text display area 1031 shown in (1) in FIG. 1A. In some embodiments of this application, the recognized text display area 130 may include an all-speaker text display area, for example, an all-speaker text display area 1034 shown in (2) in FIG. 6E. For related descriptions of the all-speaker text display area, refer to specific descriptions below. Details are not described herein in this application.

It can be understood that recognized text in this application may also be referred to as text that has been fully recognized, represents corresponding text finally obtained by recognizing audio data, and can be understood as a final result obtained through recognition (or referred to as a final result of speech recognition). It can be understood that the final result is displayed in a recognized text display area (for example, the recognized text display area 130). Text that is being recognized in this application represents corresponding text obtained in a process of recognizing audio data, and can be understood as an intermediate result obtained through recognition (or referred to as an intermediate result of speech recognition) rather than a final result obtained through recognition. It can be understood that the intermediate result is displayed in an in-progress recognition text display area (for example, the in-progress recognition text display area 1033).

It should be noted that the final result does not change with speech recognition in a subsequent process, while the intermediate result may be corrected with speech recognition in a subsequent process to obtain a new intermediate result or a final result. For example, as shown in (1) in FIG. 1A, the final result may be displayed in the second speaker text display area 1031 and the first speaker text display area 1032, and the intermediate result may be displayed in the in-progress recognition text display area 1033.

It should also be noted that because audio data is continuously collected, the audio data is continuously recognized, that is, a part of audio data is recognized each time after the part of audio data is collected. In this case, the final result is a final result obtained by recognizing a part of audio data each time after the part of audio data is collected in the continuous recognition process, rather than a final result obtained by recognizing all audio data collected in the entire continuous recognition process. Similarly, the intermediate result is an intermediate result obtained by recognizing a part of audio data each time after the part of audio data is collected in the continuous recognition process, rather than an intermediate result obtained by recognizing all the audio data collected in the entire continuous recognition process.

A user may tap the second speaker text display area 1031 (including recognized text) to trigger editing of the text included in the second speaker text display area 1031. However, in a related technology, when the electronic device is making recording and converting speech into text, the user cannot edit content obtained through speech recognition. Therefore, the electronic device does not respond to the user operation of tapping the second speaker text display area 1031. In other words, in this case, the user cannot edit the text (that is, the recognized text) included in the second speaker text display area 1031.

After the user taps the stop recording control 101, the electronic device may stop recording, and display a user interface shown in (2) in FIG. 1A. Optionally, in response to a user operation of tapping the stop recording control 101, the electronic device may stop recording, and display the user interface shown in (2) in FIG. 1A. Optionally, the electronic device may detect a user operation performed on the stop recording control 101. In response to the user operation, the electronic device may stop recording, and display the user interface shown in (2) in FIG. 1A. Similar to the user interface shown in (1) in FIG. 1A, the user interface shown in (2) in FIG. 1A may also include a second speaker text display area 1031.

After the user taps the second speaker text display area 1031 shown in (2) in FIG. 1A, a cursor is displayed in the second speaker text display area 1031, and the electronic device may display a user interface shown in (1) in FIG. 1B. Optionally, in response to a user operation of tapping the second speaker text display area 1031 shown in (2) in FIG. 1A, the cursor is displayed in the second speaker text display area 1031, and the electronic device may display the user interface shown in (1) in FIG. 1B. Optionally, the electronic device may detect a user operation performed on the second speaker text display area 1031 shown in (2) in FIG. 1A. In response to the user operation, the cursor is displayed in the second speaker text display area 1031, and the electronic device may display the user interface shown in (1) in FIG. 1B. The user interface shown in (1) in FIG. 1B may include a cursor 104 and a keyboard 105. The keyboard 105 may include a key 1051. The key 1051 is a delete key. In some embodiments of this application, a key may also be referred to as a button, and can be understood as a control.

The user may tap the key 1051 to delete some or all of the text included in the second speaker text display area 1031. As shown in (1) in FIG. 1B, after the user taps the key 1051, the electronic device may delete text that is in the second speaker text display area 1031 and that is located before the cursor 104, and display a user interface shown in (2) in FIG. 1B. Optionally, in response to a user operation of tapping the key 1051 shown in (1) in FIG. 1B, the electronic device may delete text that is in the second speaker text display area 1031 and that is located before or after the cursor 104, and display the user interface shown in (2) in FIG. 1B. Optionally, the electronic device may detect a user operation performed on the key 1051 shown in (1) in FIG. 1B. In response to the user operation, the electronic device may delete the text that is in the second speaker text display area 1031 and that is located before the cursor 104, and display the user interface shown in (2) in FIG. 1B.

It can be understood that the text before or after the cursor is text located before or after the cursor in a writing order. For example, when the writing order is from left to right, the text before the cursor is text located on a left side of the cursor, and the text after the cursor is text located on a right side of the cursor. For another example, when the writing order is from right to left, the text before the cursor is text located on a right side of the cursor, and the text after the cursor is text located on a left side of the cursor.

In some embodiments of this application, a default writing order may be set in the electronic device. For example, the default writing order that is set in the electronic device may be from left to right.

In some embodiments of this application, a control refers to an interactive element in a user interface, and is configured to receive an input of the user, display information, or perform a specific function. In some other embodiments of this application, a control refers to a graphical user interface element. For example, the control may be an icon.

As shown in FIG. 1A and FIG. 1B, at present, in a process in which the electronic device converts collected audio data into text, the text obtained through conversion cannot be edited. However, when the electronic device stops recording and no longer recognizes the collected audio data, the text obtained through conversion can be edited on the electronic device.

**If the recognized text is edited in a speech-to-text process, edited content and recognized content overwrite each other, resulting in a loss of the edited content or the recognized content. This is specifically described below.**

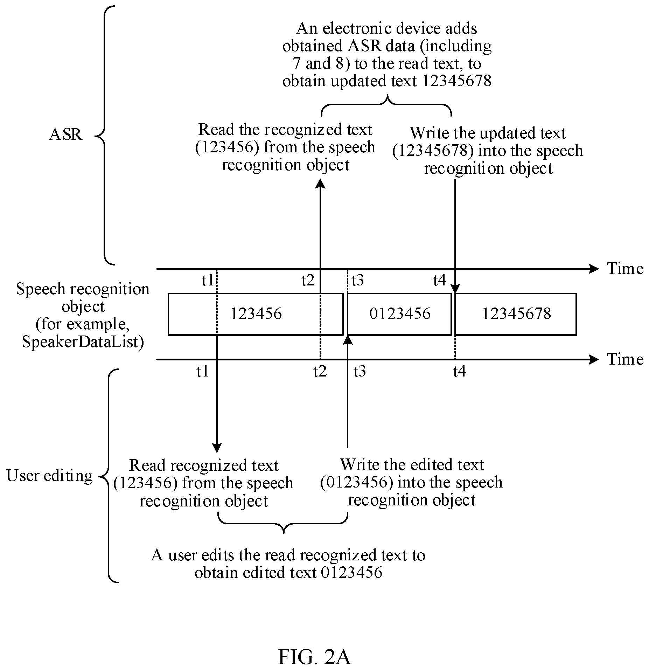

In the speech-to-text process, the electronic device may continuously write, into a corresponding speech recognition object, text converted from audio data. The speech recognition object may include the text converted from the audio data. In some embodiments of this application, the speech recognition object may include recognized text. For example, the speech recognition object may be SpeakerDataList. As shown in FIG. 2A, originally stored text in the speech recognition object is 123456, that is, the recognized text (the text converted from the collected audio data) is 123456. The user may tap a corresponding area on the display screen to edit the recognized text (namely, 123456). In response to the tap operation, the electronic device may read the recognized text, namely, 123456, from the speech recognition object at a moment t1. The user may edit the recognized text, for example, add a numeral 0 before the recognized text. Correspondingly, the electronic device may obtain edited text, namely, 0123456. Further, at a moment t3, the electronic device may write the edited text into the speech recognition object. In this case, the text in the speech recognition object changes from 123456 to 0123456. It can be understood that t1 is earlier than t3.

Because a process of collecting audio data and converting the audio data to text (that is, recognizing the audio data to obtain the text) is continuously performed, in the foregoing editing process performed by the user, the electronic device also continuously obtains ASR data. The ASR data may include the text converted from the audio data. As shown in FIG. 2A, in a process in which the user edits the read recognized text, the electronic device may obtain new ASR data (for example, 7 and 8 shown in FIG. 2A), and then add text (which can be understood as new recognized text) in the ASR data to the read recognized text. It can be understood that before the foregoing addition is successfully performed, the text in the speech recognition object is still 123456. Specifically, at a moment t2, the electronic device may read the recognized text from the speech recognition object. Because the user has not completed the foregoing editing at this moment, the recognized text read by the electronic device is still 123456. Further, the electronic device adds 7 and 8 included in the obtained new ASR data to the read recognized text, to obtain updated text, namely, 12345678. At a moment t4, the electronic device may write the updated text into the speech recognition object. In this case, the text in the speech recognition object changes from 0123456 to 12345678. It can be understood that t2 is earlier than t4, t1 is earlier than t2, t2 is earlier than t3, and t3 is earlier than t4.

It can be understood that, as shown in FIG. 2A, the user may edit the recognized text, and in the editing process, the electronic device may update the recognized text based on the obtained new ASR data. However, because the user has not completed editing of the recognized text when the update starts, the electronic device updates the original recognized text instead of updating the text obtained by performing editing by the user. In this case, although the electronic device can display the text obtained by performing editing by the user, the electronic device cannot retain the text obtained through editing, resulting in a loss of user-edited content.

It can be understood that the electronic device may update the recognized text based on the obtained new ASR data. In the update process, the user may trigger editing of the recognized text. Similar to the foregoing situation, because the electronic device has not completed an update of the recognized text when the user triggers the start of editing, the user edits the original recognized text instead of editing the updated recognized text. In this case, although the electronic device can retain edited content, the electronic device cannot retain the updated recognized text, resulting in a loss of the recognized content.

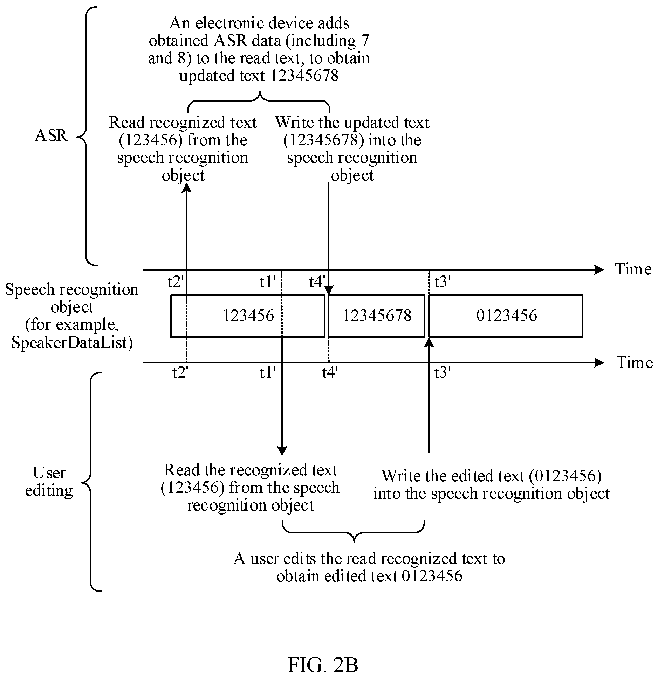

Specifically, as shown in FIG. 2B, the electronic device may obtain new ASR data (including text 7 and 8 converted from audio data). At a moment t2', the electronic device may read the recognized text from the speech recognition object. Further, the electronic device may add the text 7 and 8 in the obtained new ASR data to the read recognized text, to obtain updated text, namely, 12345678. At a moment t4', the electronic device may write the updated text into the speech recognition object. In this case, the text in the speech recognition object changes from 123456 to 12345678. It can be understood that t2' is earlier than t4'.

In the foregoing update process, the user may tap a corresponding area on the display screen to edit the recognized text. In response to the tap operation, the electronic device may read the recognized text, namely, 123456, from the speech recognition object at a moment t1'. As shown in FIG. 2B, the user may edit the recognized text, for example, add a numeral 0 before the recognized text. Correspondingly, the electronic device may obtain edited text, namely, 0123456. At a moment t3', the electronic device may write the edited text into the speech recognition object. In this case, the text in the speech recognition object changes from 12345678 to 0123456. It can be understood that t1' is earlier than t3', t2' is earlier than t1', t1' is earlier than t4', and t4' is earlier than t3'.

In summary, the user may edit the recognized text obtained by the electronic device, and the electronic device may also update the recognized text based on the obtained new ASR data. The editing process and the update process do not affect each other and are independent of each other, so that edited content and recognized content may overwrite each other, resulting in a loss of the edited content or the recognized content.

Based on the foregoing content, embodiments of this application provide a display method and a related device. According to the method, in a recording process of an electronic device, a user may trigger editing; and after the user triggers the editing, the electronic device may place newly obtained ASR data into a queue, and process the ASR data in the queue after the user ends the editing. It can be understood that, after the user ends editing, the electronic device can still continuously obtain ASR data. In this case, the electronic device may first process the ASR data in the queue, and process, after processing of the ASR data in the queue is completed, ASR data that is newly obtained by the electronic device after the user ends editing. By using the method, the electronic device can implement editing of recognized text in an ASR process without losing user-edited content and content obtained through speech recognition in an editing process.

It can be understood that the electronic device may be a mobile phone, a tablet computer, a personal computer (Personal Computer, PC), a vehicle-mounted device, an augmented reality (Augmented Reality, AR)/virtual reality (Virtual Reality, VR) device, an ultra-mobile personal computer (Ultra-Mobile Personal Computer, UMPC), a netbook, or a personal digital assistant (Personal Digital Assistant, PDA), or another device. It can be understood that a specific type of the electronic device is not limited in this application.

**The following first describes an apparatus in embodiments of this application.**

### 1. Electronic device

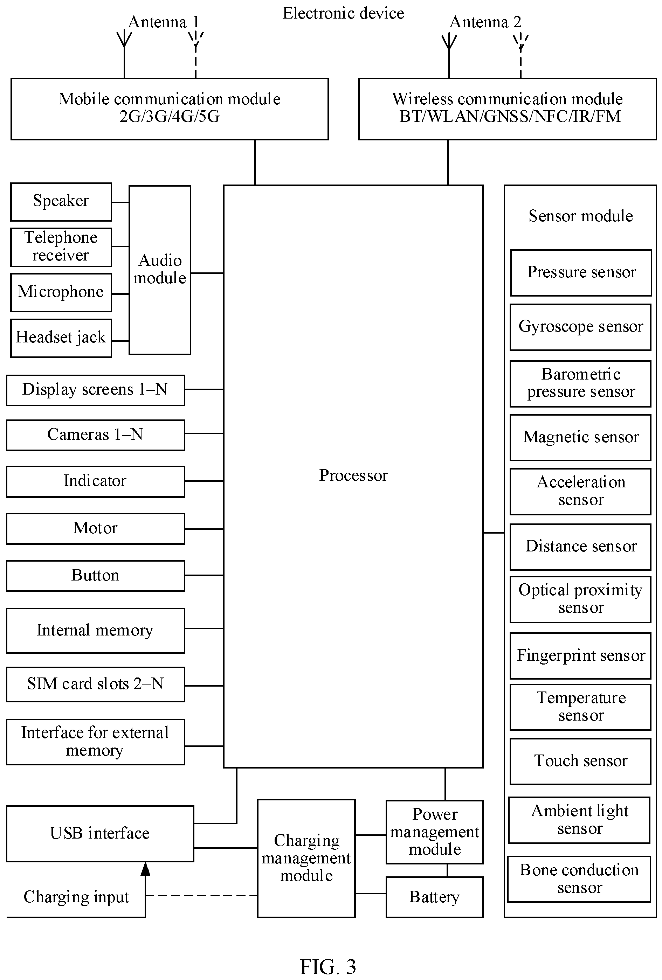

FIG. 3 is a diagram of a hardware structure of an electronic device according to an embodiment of this application.

As shown in FIG. 3, the electronic device may include a processor, an interface for external memory, an internal memory, a universal serial bus (Universal Serial Bus, USB) interface, a charging management module, a power management module, a battery, an antenna 1, an antenna 2, a mobile communication module, a wireless communication module, a sensor module, a button, a motor, an indicator, a camera, a display screen, a subscriber identity module (Subscriber Identity Module, SIM) card slot, and the like. An audio module may include a speaker, a telephone receiver, a microphone, a headset jack, and the like. The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It can be understood that the structure illustrated in this embodiment of this application does not constitute any specific limitation on the electronic device. It can be understood that the illustrated components may be implemented by hardware, software, or a combination of software and hardware. In some embodiments of this application, the electronic device may include more components than those shown in the figure. For example, the electronic device may include another type of sensor. In some other embodiments of this application, the electronic device may include fewer components than those shown in the figure, a combination of some components, splitting of some components, or a different arrangement of the components. Interface connection relationships between the modules illustrated in this embodiment of this application are merely examples for description, and do not constitute any limitation on the structure of the electronic device.

The processor may include one or more processing units. For example, the processor may include an application processor (Application Processor, AP), a modem processor (Modem, which may also referred to as a baseband processor), a graphics processing unit (Graphics Processing Unit, GPU), an image signal processor (Image Signal Processor, ISP), a controller, a video codec, a digital signal processor (Digital Signal Processor, DSP), an audio digital signal processor (Audio Digital Signal Processor, ADSP), a sensor hub (sensor hub), a neural-network processing unit (Neural-network Processing Unit, NPU), and/or the like. The AP is a processor responsible for running an operating system and an application. The modem is a processor responsible for handling various communication protocols.

A wireless communication function of the electronic device may be implemented by using the antenna 1, the antenna 2, the mobile communication module, the wireless communication module, the modem, and the like. The modem may interact with a base station through antennas (for example, the antenna 1 and the antenna 2). In some embodiments, in the electronic device, the antenna 1 is coupled to the mobile communication module, and the antenna 2 is coupled to the wireless communication module, so that the electronic device can communicate with a network and another device by using a wireless communication technology.

The electronic device may implement a display function by using the GPU, the display screen, the application processor, and the like.

The GPU is a microprocessor for image processing, and is connected to the display screen and the application processor. The GPU is configured to perform mathematical and geometric calculation, and perform graphics rendering. The processor may include one or more GPUs that execute program instructions to generate or change display information. The display screen is configured to display an image, a video, and the like. In some embodiments, the electronic device may include one or more display screens.

The camera is configured to capture a still image or a video. The ISP is configured to process data fed back by the camera. Light is transferred to a photosensitive element of the camera through a lens, and an optical signal is converted into an electrical signal. The photosensitive element of the camera transfers the electrical signal to the ISP for processing, to convert the electrical signal into an image visible to naked eyes. The electronic device may include one or more cameras.

The internal memory may include one or more RAMs and one or more non-volatile memories (Non-Volatile Memories, NVMs). The random access memory may be directly read and written by the processor, may be configured to store executable programs (for example, machine instructions) of an operating system or other running programs, and may be further configured to store data of users and applications, and the like. The non-volatile memory may also store executable programs, data of users and applications, and the like, which may be preloaded into the random access memory for the processor to perform direct reading and writing.

In this embodiment of this application, code for implementing methods in embodiments of this application may be stored in the non-volatile memory. When running a notes application, the electronic device may load, into the random access memory, the executable code stored in the non-volatile memory.

The interface for external memory may be configured to connect to an external non-volatile memory, to expand a storage capability of the electronic device.

The electronic device may implement an audio function by using the audio module, the speaker, the telephone receiver, the microphone, the headset jack, the application processor, and the like.

In some embodiments of this application, when a speech-to-text (that is, audio data-to-text mentioned above) functionality is enabled, the electronic device may enable a microphone to collect a sound signal, and convert the sound signal into a corresponding electrical signal. In some embodiments of this application, audio data in this application can be understood as an electrical signal corresponding to a sound signal.

An operating system of the electronic device may use a layered architecture, an event driven architecture, a microkernel architecture, a microservices-based architecture, or a cloud architecture. In this embodiment of this application, an Android (Android) operating system of the layered architecture is used as an example to describe a software structure of the electronic device. It should be noted that, although the Android operating system (which may be referred to as an Android system for short) is used as an example for description in this embodiment of this application, a basic principle thereof is also applicable to an electronic device that is based on iOS, Windows, or another operating system.

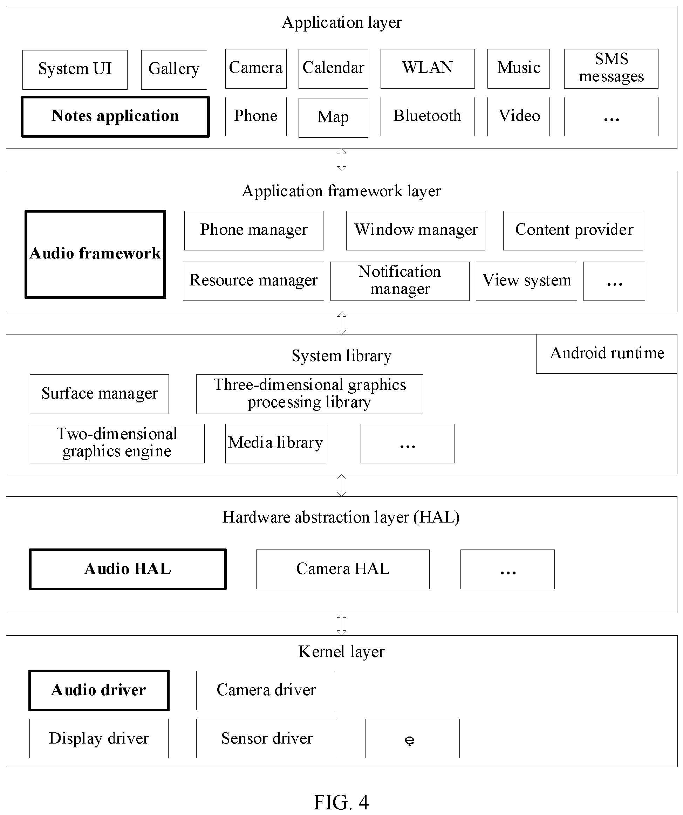

FIG. 4 is a diagram of a software structure of an electronic device according to an embodiment of this application.

The software structure of the electronic device uses a layered architecture, to divide software into several layers, and each layer has clear roles and tasks. The layers communicate with each other through a software interface. For example, the Android system runs on an AP. In some embodiments of this application, a software structure of the Android system is divided into five layers from top to bottom: an application layer, an application framework layer (Framework), an Android runtime (Android runtime) and system library, a hardware abstraction layer (HAL), and a kernel layer (Kernel) of the system.

The application layer may include a series of application packages. The application packages may include applications such as camera, gallery, calendar, phone, map, WLAN, Bluetooth, music, video, and SMS messages. The application layer may further include a notes application. The notes application may be used to record and store a plurality of types of notes, such as text, picture, recorded audio, and other multimedia content. In some embodiments of this application, the notes application may be a system application. In some embodiments of this application, the notes application may be a third-party application. It can be understood that the name "notes application" is merely an example provided in this application, and the name of the application is not limited in this application. The application layer may further include a system UI (System User Interface, system UI). The system UI is configured to display an interface of the electronic device, for example, display a user interface of the notes application, display a signal icon corresponding to a SIM card, and display a phone interface.

The application framework layer provides an application programming interface (Application Programming Interface, API) and a programming framework for the applications at the application layer. The application framework layer may include some predefined functions. For example, the application framework layer may include a window manager, a content provider, a view system, a phone manager, a resource manager, a notification manager, and the like. The phone manager is configured to provide a call function of the electronic device, for example, management of a call status (including answering, declining, or the like). The application framework layer may further include an audio framework. The audio framework can be understood as a bridge providing access to the system library (for example, a media library) for the applications.

The runtime (Runtime) is responsible for scheduling and management of the system. The runtime includes a core library and a virtual machine. The core library includes two parts: a performance function that needs to be invoked in a programming language (for example, a java language), and a core library of the system. The application layer and the application framework layer run on the virtual machine. The virtual machine executes programming files (for example, java files) of the application layer and the application framework layer as binary files. The virtual machine is configured to implement functions such as object lifecycle management, stack management, thread management, security and exception management, and garbage collection.

The system library may include a plurality of functional modules, such as a surface manager (Surface Manager), a media library (Media Library), a three-dimensional graphics processing library (for example, an OpenGL ES), and a two-dimensional graphics engine (for example, an SGL). For specific meanings and functions of these functional modules, refer to related technical documents. Details are not described herein.

The hardware abstraction layer (HAL) is an interface layer located between a kernel of the operating system and upper-layer software, and is to abstract hardware. The hardware abstraction layer is an abstraction interface of a device kernel driver, and is configured to provide a higher-level Java API framework with an application programming interface for accessing an underlying device. The HAL may provide a standard interface to display a device hardware function to the higher-level Java API framework. The HAL includes a plurality of library modules (for example, a camera HAL and an audio HAL). When the system framework layer API requires access to hardware of a portable device, the operating system loads the library modules for components of the hardware.

It can be understood that the audio HAL provides an interface between an application and audio hardware (for example, a microphone and a speaker), and is configured to manage input, output, configuration, and control of an audio stream. Main objectives of the audio HAL are to provide a consistent audio interface for upper-layer applications and hide details of underlying audio hardware. By using the audio HAL, the application may access and control functions of the audio hardware, such as audio input and output, encoding and decoding, and mixing.

The kernel layer is a foundation of the Android system. The kernel layer is responsible for functions such as a hardware driver, a network, a power supply, system security, and memory management. The kernel layer is an intermediate layer between hardware and software, and a function of the kernel layer is to transfer a request of an application to the hardware. The kernel layer may include an audio driver, a display driver, a camera driver, and a sensor driver. The audio driver is an intermediate layer between audio software and audio hardware, and is configured to transfer an access request from an upper-layer software module to the audio hardware.

It should be noted that, the diagram of the software structure of the electronic device shown in FIG. 4 provided in this application is merely an example, and is not used to limit specific module division of different layers of the Android system. For details, refer to the descriptions of the software structure of the Android system in conventional technologies. In addition, methods provided in this application may be alternatively implemented based on other operating systems. Examples are not provided one by one in this application.

### 2. ASR system including an electronic device

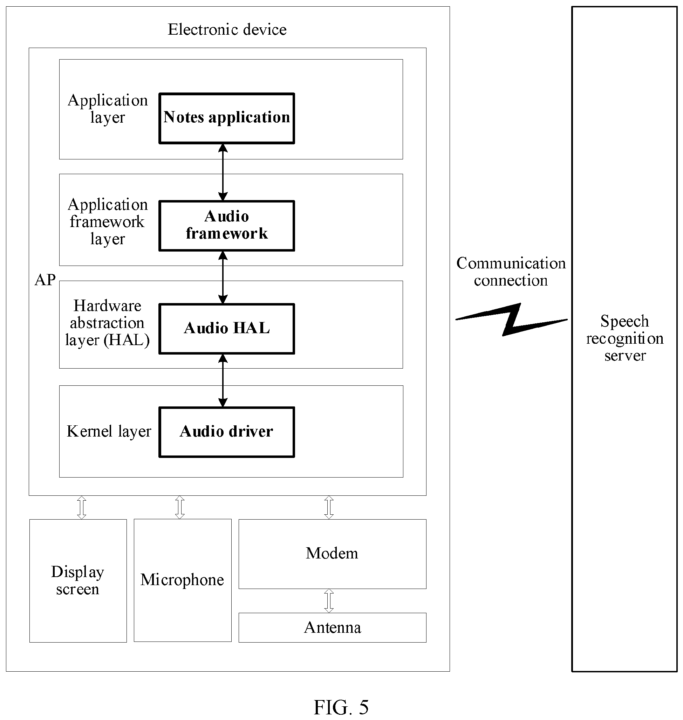

As shown in FIG. 5, the ASR system may include an electronic device and a speech recognition server. A communication connection may be established between the electronic device and the speech recognition server. The communication connection may be wireless fidelity (Wireless Fidelity, Wi-Fi), 3G/4G/5G, or another access network. The network mentioned herein may be a wide area network (for example, an Internet). In this case, the electronic device may communicate with the speech recognition server via the wide area network (for example, the Internet). The speech recognition server may be configured to recognize audio data to obtain corresponding text.

It can be understood that, as shown in FIG. 5, a notes application, an audio framework, an audio HAL, and an audio driver in the electronic device all run on an AP of the electronic device. The electronic device may detect a user operation that triggers the start of recording in the notes application. In response to the user operation, the notes application in the electronic device may request the audio framework in the electronic device to collect audio data. Correspondingly, the audio framework in the electronic device may receive the request, and control, by using the audio HAL and the audio driver, the microphone in the electronic device to collect a sound signal. After collecting the sound signal, the microphone in the electronic device may convert the sound signal into an electrical signal, namely, audio data, and then send the audio data to the AP. In this way, the audio driver running on the AP can obtain the audio data and pass up the audio data via the audio HAL and the audio framework to the notes application. When a speech-to-text (that is, audio data-to-text mentioned above) functionality is enabled, the notes application in the electronic device may transmit the obtained audio data to a modem in the electronic device, then send out the obtained audio data via an antenna, and transmit the obtained audio data to the speech recognition server via the network. After receiving the audio data sent by the electronic device, the speech recognition server may recognize the audio data to obtain a speech-to-text result (that is, ASR data mentioned above), and then send the speech-to-text result to the electronic device. Correspondingly, the electronic device may receive the speech-to-text result via the antenna and the modem, and transmit the speech-to-text result to the AP. The notes application running on the AP may receive the speech-to-text result, process the speech-to-text result to obtain text data, and then send the text data to a display screen for display.

It can be understood that text data mentioned in this application may be a binary-encoded character recognizable by the electronic device, and different binary-encoded characters may be specifically corresponding to different text (for example, Chinese characters and Latin alphabets).

**The following describes an editing scenario provided in embodiments of this application.**

### 1. Record audio data in a note.

A user may trigger an electronic device to start a notes application by tapping an application icon of the notes application, or may trigger the electronic device to record in the notes application after the electronic device starts the notes application. It can be understood that an icon in this application may refer to a control.

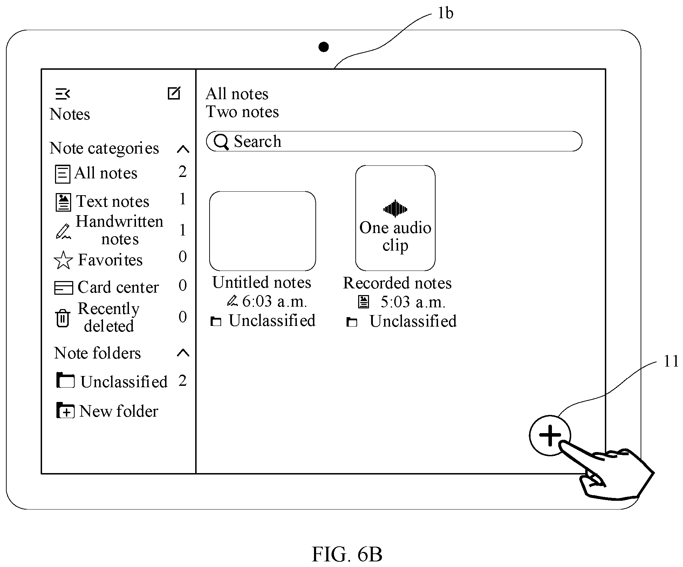

For example, a desktop 1a shown in FIG. 6A may include a plurality of application icons (for example, a weather application icon, a calendar application icon, an email application icon, a settings application icon, an APP-store application icon, a notes application icon 10, and a photos application icon). These application icons may be used for triggering the electronic device to start corresponding applications. The notes application icon 10 is an icon of a notes application. The user may record text information, picture information, and the like by using the notes application. After receiving a user operation of tapping the notes application icon 10 shown in FIG. 6A, the electronic device may display a notes-application main interface 1b shown in FIG. 6B. Optionally, in response to the user operation of tapping the notes application icon 10 shown in FIG. 6A, the electronic device may display the notes-application main interface 1b shown in FIG. 6B. In some embodiments of this application, after receiving the user operation of tapping the notes application icon 10 shown in FIG. 6A (or in response to the user operation of tapping the notes application icon 10 shown in FIG. 6A), the electronic device may first start the notes application, and then display the user interface shown in FIG. 6B. Optionally, the electronic device may detect the user operation performed on the notes application icon 10 shown in FIG. 6A. In response to the user operation, the electronic device may start the notes application, and display the notes-application main interface 1b shown in FIG. 6B. The notes-application main interface 1b may include icons corresponding to created notes (for example, an icon corresponding to "untitled notes" and an icon corresponding to "recorded notes" that are shown in FIG. 6B). The notes-application main interface 1b may further include a new note control 11. The new note control 11 may be configured to create a note.

For example, after receiving a user operation of tapping the new note control 11 shown in FIG. 6B, the electronic device may display a note creation interface 1c shown in FIG. 6C. Optionally, in response to the user operation of tapping the new note control 11 shown in FIG. 6B, the electronic device may display the note creation interface 1c shown in FIG. 6C. Optionally, the electronic device may detect the user operation performed on the new note control 11 shown in FIG. 6B. In response to the user operation, the electronic device may display the note creation interface 1c shown in FIG. 6C. The note creation interface 1c may include a text note creation control 121 and a handwritten note creation control 122. The user may trigger the electronic device to create a text note by tapping the text note creation control 121, or the like. Similarly, the user may trigger the electronic device to create a handwritten note by tapping the handwritten note creation control 122, or the like.

For example, after receiving a user operation of tapping the text note creation control 121 shown in FIG. 6C, the electronic device may display a new note interface 1d shown in FIG. 6D. Optionally, in response to the user operation of tapping the text note creation control 121 shown in FIG. 6C, the electronic device may display the new note interface 1d shown in FIG. 6D. In some embodiments of this application, after receiving the user operation of tapping the text note creation control 121 shown in FIG. 6C (or in response to the user operation of tapping the text note creation control 121 shown in FIG. 6C), the electronic device may first create a text note, and then display the new note interface 1d shown in FIG. 6D. Optionally, the electronic device may detect the user operation performed on the text note creation control 121 shown in FIG. 6C. In response to the user operation, the electronic device may display the new note interface 1d shown in FIG. 6D. The new note interface 1d may include an add recording control 13. The add recording control 13 may be configured to trigger recording of audio data.

For example, after receiving a user operation of tapping the add recording control 13 shown in FIG. 6D, the electronic device may start recording and display a corresponding interface (a user interface shown in FIG. 6E). Optionally, in response to the user operation of tapping the add recording control 13 shown in FIG. 6D, the electronic device may start recording and display the corresponding interface (the user interface shown in FIG. 6E). Optionally, the electronic device may detect the user operation performed on the add recording control 13 shown in FIG. 6D. In response to the user operation, the electronic device may start recording and display the corresponding interface (the user interface shown in FIG. 6E).

It should be noted that the foregoing content is merely an example provided in this application, and the user may alternatively create a note in another manner (for example, in response to the user operation of tapping the new note control 11 by the user, the electronic device displays the new note interface 1d). This is not limited in this application.

### 2. Enable a speech-to-text functionality.

In some embodiments of this application, after creating a new note, if the electronic device makes recording in the newly created note, or makes recording in a note that has been created previously but does not contain any recording, the electronic device may enable a speech-to-text functionality by default and enable a function of displaying speakers by default.

For example, after creating the new note, the electronic device may display the new note interface 1d shown in FIG. 6D. Further, in response to a user operation of tapping the add recording control 13 included in the new note interface 1d, the electronic device may start recording, and enable the speech-to-text functionality and the function of displaying speakers by default. At a 29^{th} second of the recording, the electronic device may display a recording interface 1e that displays speakers and recognized text shown in (1) in FIG. 6E. The recording interface 1e that displays speakers and recognized text may include a recording-related information display area 14. The recording-related information display area 14 may include recording-related information of the electronic device, such as a recording time, a voiceprint waveform, text recognized based on recorded audio data, and corresponding speakers. The recording-related information display area 14 may include a speech-to-text control 141 and a speaker control 142. The speech-to-text control 141 may be configured to control enabling and disabling of the speech-to-text functionality, and the speaker control 142 may be configured to control enabling and disabling of the function of displaying speakers (displaying speakers corresponding to recognized text on a display screen). The speech-to-text control 141 in the recording interface 1e that displays speakers and recognized text is filled with black, and this indicates that the speech-to-text control 141 is in a selected state. When the speech-to-text control 141 is in a selected state, the speech-to-text functionality is enabled. Similarly, the speaker control 142 in the recording interface 1e that displays speakers and recognized text is filled with black, and this indicates that the speaker control 142 is in a selected state. When the speaker control 142 is in the selected state, the function of displaying speakers is enabled.

It should be noted that, because the electronic device makes recording with the speech-to-text functionality enabled, the electronic device may recognize collected audio data in a recording process to obtain corresponding text. Similar to the user interface shown in (1) in FIG. 1A, the recording-related information display area 14 in the recording interface 1e that displays speakers and recognized text may also include a stop recording control 101, a voiceprint waveform display area 102, and a speech recognition text display area 103. The speech recognition text display area 103 may display text obtained by the electronic device by recognizing the audio data collected by the electronic device. The text obtained through recognition may specifically include recognized text (for example, text shown in a second speaker text display area 1031 and a first speaker text display area 1032) and text that is being recognized (for example, text shown in an in-progress recognition text display area 1033).

It can be understood that, because the electronic device enables the speech-to-text functionality, and also enables the function of displaying speakers, the electronic device may display, on the display screen, a speaker corresponding to the text obtained by recognizing the collected audio data. As shown in (1) in FIG. 6E, "00:2" and "speaker 2" are displayed above the second speaker text display area 1031, and this indicates that a speaker corresponding to the text in the second speaker text display area 1031 is the speaker 2, and the text is text recognized based on utterances by the speaker 2 from a 22^{nd} second of the recording. Similarly, "00: 19" and "speaker 1" are displayed above the first speaker text display area 1032, and this indicates that a speaker corresponding to the text in the first speaker text display area 1032 is the speaker 1, and the text is text recognized based on utterances by the speaker 1 from a 19^{th} second of the recording.

It should be noted that the electronic device may indicate, in another manner, that the speech-to-text control 141 and the speaker control 142 are in selected states. This is not limited in this application. For example, if a bold line is displayed below the speech-to-text control 141, it indicates that the speech-to-text control 141 is in a selected state. Similarly, if a bold line is displayed below the speaker control 142, it indicates that the speaker control 142 is in a selected state. For another example, if a black box is displayed around the speech-to-text control 141, it indicates that the speech-to-text control 141 is in a selected state. Similarly, if a black box is displayed around the speaker control 142, it indicates that the speaker control 142 is in a selected state.

It should also be noted that in some scenarios, the speech-to-text control 141 is in a disabled state (or referred to as an unavailable state). For example, as shown in FIG. 1B, after the electronic device stops recording in the notes application, the speech-to-text control 141 only has an icon outline, and the icon outline is gray, indicating that the speech-to-text control 141 is in a disabled state. It can be understood that, when the speech-to-text control 141 is in the disabled state, the electronic device does not respond to an operation of tapping the speech-to-text control 141 by the user. In other words, when the speech-to-text control 141 is disabled, the electronic device cannot enable the speech-to-text functionality.

Similarly, in some embodiments of this application, in some scenarios, the speaker control 142 and other controls on a user interface of the notes application may also be in a disabled state. For details, refer to the foregoing descriptions of the speech-to-text control 141. Details are not described herein again in this application.

In some embodiments of this application, after creating a new note, if the electronic device makes recording in the newly created note, or makes recording in a note that has been created previously but does not contain any recording, the electronic device may enable a speech-to-text functionality by default but disable a function of displaying speakers by default.

For example, in response to a user operation of tapping the add recording control 13 included in the new note interface 1d, the electronic device may start recording, enable the speech-to-text functionality by default, and disable the function of displaying speakers by default. At a 29^{th} second of the recording, the electronic device may display a recording interface 2e that displays recognized text but does not display speakers shown in (2) in FIG. 6E. Similar to the recording interface 1e that displays speakers and recognized text, the recording interface 2e that displays recognized text but does not display speakers may include a recording-related information display area 14. The speech-to-text control 141 in the recording interface 2e that displays recognized text but does not display speakers is filled with black, and this indicates that the speech-to-text control 141 is in a selected state. In contrast, the speaker control 142 only has an icon outline and is not filled with black, and this indicates that the speaker control 142 is in an unselected state. In this case, the speech-to-text functionality is enabled, and the function of displaying speakers is not enabled.

It should be noted that, because the electronic device makes recording with the speech-to-text functionality enabled but the function of displaying speakers not enabled, the electronic device may recognize collected audio data in a recording process to obtain corresponding text, but does not display a speaker corresponding to the text. The same as the recording interface 1e that displays speakers and recognized text, the recording interface 2e that displays recognized text but does not display speakers may include text that is being recognized. As shown in FIG. 6E, a speech recognition text display area 103 in the recording interface 2e that displays recognized text but does not display speakers may include an in-progress recognition text display area 1033, and the in-progress recognition text display area 1033 includes the text that is being recognized. However, a difference from the recording interface 1e that displays speakers and recognized text lies in that, in the recording interface 2e that displays recognized text but does not display speakers, all recognized text is directly displayed in one area instead of being separately displayed in an area corresponding to a corresponding speaker. As shown in FIG. 6E, the recording interface 2e that displays recognized text but does not display speakers includes an all-speaker text display area 1034, but does not include a second speaker text display area 1031 and a first speaker text display area 1032; and text in the all-speaker text display area 1034 includes text in the second speaker text display area 1031 and the first speaker text display area 1032. In this case, a recognized text display area 130 includes the all-speaker text display area 1034, but does not include display areas corresponding to speakers (for example, the second speaker text display area 1031 and the first speaker text display area 1032).

It can be understood that, whether the electronic device enables the speech-to-text functionality and the function of displaying speakers by default during recording is not limited in this application.

It can be understood that the user may choose whether to enable the speech-to-text functionality and the function of displaying speakers. For example, after receiving a user operation of tapping the speaker control 142 shown in (2) in FIG. 6E, the electronic device may display the recording interface 1e that displays speakers and recognized text shown in (1) in FIG. 6E. Optionally, in response to the user operation of tapping the speaker control 142 shown in (2) in FIG. 6E, the electronic device may display the recording interface 1e that displays speakers and recognized text shown in (1) in FIG. 6E. In some embodiments of this application, optionally, after receiving the user operation of tapping the speaker control 142 shown in (2) in FIG. 6E (or in response to the user operation of tapping the speaker control 142), the electronic device may enable the function of displaying speakers, and then display the recording interface 1e that displays speakers and recognized text shown in (1) in FIG. E. The electronic device may detect the user operation performed on the speaker control 142 shown in (1) in FIG. 6E. In response to the user operation, the electronic device may enable the function of displaying speakers, and display the recording interface 1e that displays speakers and recognized text shown in (1) in FIG. 6E.

In some embodiments of this application, if the electronic device resumes recording in a note that has been created and contains a recording, the electronic device may determine, based on enabled/disabled states of the speech-to-text functionality and the function of displaying speakers when recording is stopped last time, whether to enable the speech-to-text functionality and the function of displaying speakers in a process of resuming recording this time.

In some embodiments of this application, if the electronic device makes recording in a note for the first time, the electronic device may enable the speech-to-text functionality by default and disable the function of displaying speakers by default. In contrast, if the electronic device makes recording in a note not for the first time, the electronic device may determine, based on historical selection of the user, whether the speech-to-text functionality and the function of displaying speakers need to be enabled for this recording.

For example, if the user triggers the electronic device to enable the speech-to-text functionality in a process in which the electronic device makes recording in a note last time, the electronic device may enable the speech-to-text functionality by default when the user triggers the electronic device to make recording in a note this time. Similarly, if the user triggers the electronic device to disable the speech-to-text functionality in a process in which the electronic device makes recording in a note last time, the electronic device may disable the speech-to-text functionality by default when the user triggers the electronic device to make recording in a note this time. Similarly, for an enabling/disabling mechanism of the function of displaying speakers, refer to the enabling/disabling mechanism of the speech-to-text functionality. Details are not described herein again in this application.

### 3. Edit recognized text in a speech-to-text process.

If the speech-to-text functionality is enabled, after starting recording, the electronic device may obtain text (including recognized text and text that is being recognized) obtained through recognition based on collected audio data, and display the text on the display screen. In a process in which the electronic device obtains and displays the text obtained by recognizing the collected audio data, the user may edit the recognized text. After the editing is completed, the electronic device may continue to display the text obtained through recognition.

For example, at the 29^{th} second of the recording, the electronic device may display the recording interface 1e that displays speakers and recognized text shown in (1) in FIG. 6E. For related descriptions of the recording interface 1e that displays speakers and recognized text, refer to the foregoing descriptions. After receiving a user operation of tapping the second speaker text display area 1031 shown in (1) in FIG. 6E, the electronic device may display an initial editing interface 1f shown in FIG. 6F. Optionally, in response to the user operation of tapping the second speaker text display area 1031 shown in (1) in FIG. 6E, the electronic device may display the initial editing interface 1f shown in FIG. 6F. In some embodiments of this application, after receiving the user operation of tapping the second speaker text display area 1031 shown in (1) in FIG. E (or in response to the user operation of tapping the second speaker text display area 1031), the electronic device may determine a cursor location, resume recording, and then display the initial editing interface 1f shown in FIG. 6F. Optionally, the electronic device may detect the user operation performed on the second speaker text display area 1031 shown in (1) in FIG. 6E. In response to the user operation, at a 31^{st} second of the recording, the electronic device may display the initial editing interface 1f shown in FIG. 6F. The initial editing interface 1f may include a cursor 15 and a keyboard 16. The cursor 15 is displayed in the second speaker text display area 1031. The keyboard 16 may include a delete key 161.

For example, after receiving a user operation of tapping the delete key 161 in the initial editing interface 1f, the electronic device may display an editing interface 1g shown in FIG. 6G. Optionally, in response to the user operation of tapping the delete key 161 in the initial editing interface 1f, the electronic device may display the editing interface 1g shown in FIG. 6G. In some embodiments of this application, after receiving the user operation of tapping the delete key 161 in the initial editing interface 1f (or in response to the user operation of tapping the delete key 161 in the initial editing interface 1f), the electronic device may delete text that is in the second speaker text display area 1031 and that is located before the cursor 15 (for example, a numeral "6" located on a left side of the cursor), resume recording, and then display the editing interface 1g. Optionally, the electronic device may detect the user operation performed on the delete key 161 in the initial editing interface 1f. In response to the user operation, the electronic device may delete text that is in the second speaker text display area 1031 and that is located before the cursor 15 (for example, located on the left side of the cursor 15), and in a process of deleting the text, the electronic device may resume recording. As shown in FIG. 6G, the electronic device may delete the numeral "6" located on the left side of the cursor 15 from the text included in the second speaker text display area 1031, and display the editing interface 1g at a 35^{th} second of the recording.

For example, after receiving a user operation of tapping the keyboard 16 in the editing interface 1g, the electronic device may display an editing completion interface 1h shown in FIG. 6H. Optionally, in response to the user operation of tapping the keyboard 16 in the editing interface 1g, the electronic device may display the editing completion interface 1h shown in FIG. 6H. In some embodiments of this application, after receiving the user operation of tapping the keyboard 16 in the editing interface 1g (or in response to the user operation of tapping the keyboard 16 in the editing interface 1g), the electronic device may add a character (for example, a numeral "888") between text located before the cursor 15 and text located after the cursor 15 that are included in the second speaker text display area 1031, resume recording, and then display the editing completion interface 1h shown in FIG. 6H. Optionally, the electronic device may detect the user operation performed on the keyboard 16 in the editing interface 1g. In response to the user operation, the electronic device may add a character, for example, three digits "888", between the text located before the cursor 15 and the text located after the cursor 15 that are included in the second speaker text display area 1031, and the electronic device may further resume recording. As shown in FIG. 6H, the electronic device may display the editing completion interface 1h at a 40^{th} second.

For example, after receiving a user operation of tapping a blank area in the editing completion interface 1h, the electronic device may display a non-editing recording interface 1i shown in FIG. 6I. Optionally, in response to the user operation of tapping the blank area in the editing completion interface 1h, the electronic device may display the non-editing recording interface 1i shown in FIG. 6I. In some embodiments of this application, after receiving the user operation of tapping the blank area in the editing completion interface 1h (or in response to the user operation of tapping the blank area in the editing completion interface 1h), the electronic device may exit an editing state, add recognized text obtained in an editing process to the second speaker text display area 1031, and then display the non-editing recording interface 1i shown in FIG. 6I. Optionally, the electronic device may detect the user operation performed on the blank area in the editing complete interface 1h. In response to the user operation, the electronic device may exit the editing state, and add the recognized text obtained in the editing process to the corresponding display area corresponding to the recognized text. It can be understood that, because a speaker corresponding to the recognized text obtained in the editing process is the speaker 2, the electronic device may add the text to the text shown in the second speaker text display area 1031, and the electronic device may further resume recording and display the non-editing recording interface 1i shown in FIG. 6I at a 42^{nd} second of the recording.

It can be understood that, the user may further edit the text in the first speaker text display area 1032/the all-speaker text display area 1034. For a specific process, refer to the foregoing descriptions. Details are not described herein again in this application.

It should be noted that, if a speaker corresponding to the recognized text obtained in the editing process is not the speaker 2 but another speaker (for example, the speaker 1, or a speaker other than the speaker 1 and the speaker 2), the electronic device may display, in a new display area, the recognized text obtained in the editing process. It can be understood that, the new display area is different from the existing display areas corresponding to the speaker 1 and the speaker 2, that is, different from the first speaker text display area 1032 and the second speaker text display area 1031. In some embodiments of this application, after the user edits the text in the all-speaker text display area 1034, the electronic device may add the recognized text obtained in the editing process to the all-speaker text display area 1034.

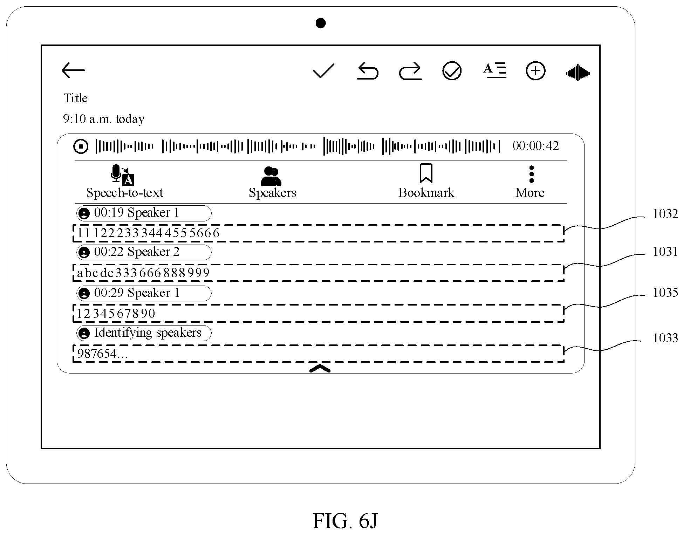

For example, if a speaker corresponding to the recognized text obtained in the editing process is the speaker 1, the recognized text obtained in the editing process may be displayed in a third speaker text display area 1035 (as shown in FIG. 6J). The third speaker text display area 1035 is a display area different from the second speaker text display area 1031, the first speaker text display area 1032, and the in-progress recognition text display area 1033.

It can be understood that in the process in which the user edits the recognized text, the electronic device no longer adds the recognized text obtained in the editing process to the corresponding display area corresponding to the recognized text, but still displays, in the display area corresponding to the text that is being recognized, the text newly recognized in the editing process.

For example, as shown in FIG. 6F, FIG. 6G, and FIG. 6H, in processes in which the user deletes and adds the text in the second speaker text display area 1031, newly recognized text is displayed in the in-progress recognition text display area 1033, and the text in the second speaker text display area 1031 and the first speaker text display area 1032 does not change. Specifically, as shown in FIG. 6E, text in the in-progress recognition text display area 1033 is "123456" at the 29^{th} second of the recording. After the user triggers editing, as shown in FIG. 6F, the text in the in-progress recognition text display area 1033 is still "123456" at the 31^{st} second of the recording. After the user deletes text (for example, deletes the numeral "6") from the second speaker text display area 1031, as shown in FIG. 6G, the text in the in-progress recognition text display area 1033 changes to "123456789" at the 35^{th} second of the recording. After the user further adds text (for example, adds the numeral "888") to the second speaker text display area 1031, as shown in FIG. 6H, the text in the in-progress recognition text display area 1033 changes to "1234567890" at the 40^{th} second of the recording.

In some embodiments of this application, when the electronic device is in the editing state, text recognized in the editing process is incrementally added to the in-progress recognition text display area 1033. In other words, newly recognized text in the in-progress recognition text display area 1033 may be incrementally added.

For example, when the electronic device is in the editing state, the text in the in-progress recognition text display area 1033 may be "123456" at the 31^{st} second of the recording. In a time period from the 31^{st} second to the 35^{th} second of the recording, newly recognized text "789" is displayed after the original text in the in-progress recognition text display area 1033, that is, "789" is displayed after "123456". In this case, the text in the in-progress recognition text display area 1033 is no longer "123456" but is "123456789" at the 35^{th} second of the recording. Similarly, in a time period from the 35^{th} second to the 40^{th} second of the recording, newly recognized text "0" is displayed after the original text in the display area, that is, "0" is displayed after "123456789". In this case, the text in the in-progress recognition text display area 1033 is no longer "123456789" but is "1234567890" at the 40^{th} second of the recording.

In some embodiments of this application, when the electronic device is in the editing state, currently recognized text is continuously updated in the in-progress recognition text display area 1033. In other words, newly recognized text in the in-progress recognition text display area 1033 may be continuously replaced.

For example, when the electronic device is in the editing state, the text in the in-progress recognition text display area 1033 may be "123456" at the 31^{st} second of the recording. In a time period from the 31^{st} second to the 35^{th} second of the recording, the original text in the in-progress recognition text display area 1033 is replaced with newly recognized text "123456789", that is, "123456" in the in-progress recognition text display area 1033 is replaced with "123456789". In this case, the text in the in-progress recognition text display area 1033 is no longer "123456" but is "123456789" at the 35^{th} second of the recording. Similarly, in a time period from the 35^{th} second to the 40^{th} second of the recording, the original text in the in-progress recognition text display area 1033 is replaced with newly recognized text "1234567890", that is, "123456789" in the in-progress recognition text display area 1033 is replaced with "1234567890". In this case, the text in the in-progress recognition text display area 1033 is no longer "123456789" but is "1234567890" at the 40^{th} second of the recording.

It should be noted that the user interfaces shown in FIG. 6A to FIG. 6J are merely examples provided in this application, and user interfaces displayed by the electronic device in the speech-to-text and editing processes may further include other elements and layouts. This is not limited in this application.

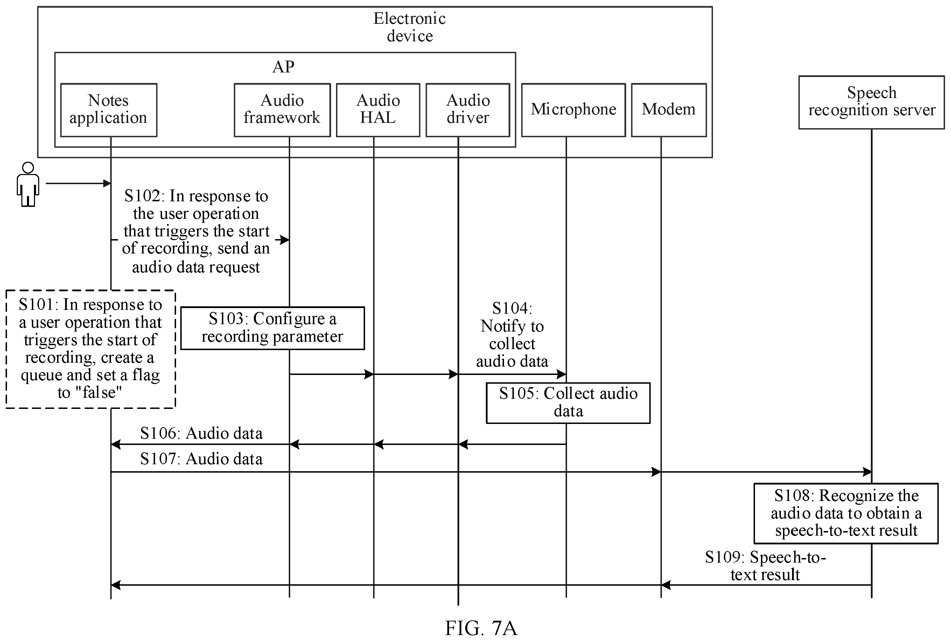

**Based on** **FIG. 7A to FIG. 7D****, the following describes a display method provided in embodiments of this application.**

FIG. 7A to FIG. 7D are a group of flowcharts of a display method according to an embodiment of this application. The method may include but is not limited the following steps.
1. Start recording, create a queue, and obtain a speech-to-text result (as shown in FIG. 7A).

S101: In response to a user operation that triggers the start of recording, a notes application creates a queue and sets a flag to "false".

A user may trigger, in the notes application, an electronic device to start recording. In some embodiments of this application, when a current note does not contain any recording, after receiving the user operation (for example, tapping an add recording control 13) that triggers the start of recording, the notes application may create a recording task and start recording. For example, as shown in FIG. 6D, the user may trigger the start of recording by tapping the add recording control 13. Correspondingly, the notes application may receive a tap operation performed on the add recording control 13. In some other embodiments of this application, when a current note contains a recording, after receiving the user operation that triggers the start of recording, the notes application may resume recording. For example, as shown in (1) in FIG. 1B, the user may trigger the start of recording by tapping a resume recording control 106. Correspondingly, the notes application may receive a tap operation performed on the resume recording control 106.

Certainly, the user may alternatively trigger, in another manner (for example, gesture or voice control), the electronic device to start recording in the notes application. This is not limited in this application.

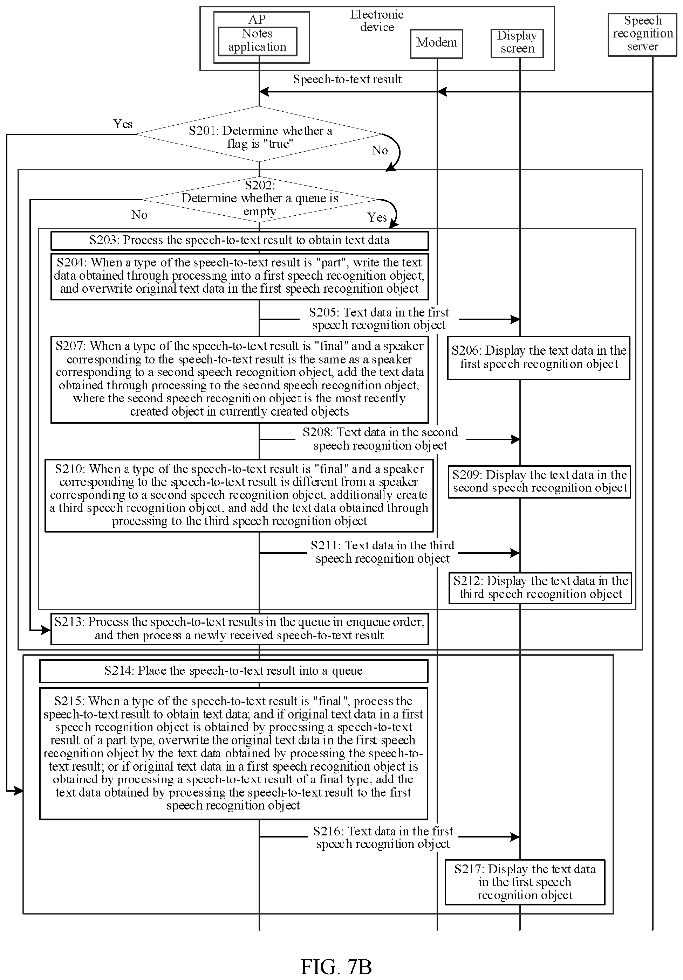

In some embodiments of this application, once the user triggers the electronic device to start recording, the electronic device may enable a speech-to-text functionality. In this case, the electronic device may perform step S 101 to step S109, and steps shown in FIG. 7B to FIG. 7D. In some embodiments of this application, although the user triggers the electronic device to start recording, the electronic device does not enable a speech-to-text functionality. In this case, the electronic device may perform step S 101 to step S106. Once the user triggers the electronic device to enable the speech-to-text functionality, the electronic device may continue to perform step S107 to step S109, and steps shown in FIG. 7B to FIG. 7D.

In some embodiments of this application, when the current note does not contain any recording, if the notes application receives the user operation that triggers the start of recording, in response to the user operation that triggers the start of recording, the notes application may create the queue and set the flag.

In some other embodiments of this application, when the current note contains a recording, it indicates that the notes application has created a queue and set a flag. If the notes application receives, in this case, the user operation that triggers the start of recording, the notes application may create a queue and set a flag after the user triggers display of the current note, without a need to create a queue and set a flag after the user triggers the start of recording. For example, when the user triggers the electronic device to display the user interfaces shown in FIG. 1B, the notes application may create a queue and set a flag, without a need to create a queue and set a flag after the user taps the resume recording control 106 to trigger the electronic device to resume recording.

It can be understood that the flag is a flag corresponding to the queue. In some embodiments of this application, each time the user triggers an exit from a note, the notes application may clear the flag and the queue. When the user triggers opening of the note next time, the notes application may set the flag to "false" again, and create a queue.

In some embodiments of this application, the flag may be set to "false" by default. When the flag is "false", it indicates that the electronic device is not in an editing state, that is, the user has not triggered editing of recognized text. In this case, text converted from audio data is not placed into the queue, but is directly processed. In contrast, when the flag is "true", it indicates that the electronic device is in an editing state, that is, the user has triggered editing of recognized text. In this case, text converted from audio data is placed into the queue instead of being directly processed.

It can be understood that a form of representation of the flag is not limited in this application. For example, the flag may be represented as isEditByUser. In this case, in response to the user operation that triggers the start of recording, the notes application may set isEditByUser=false.

It can be understood that, after detecting the user operation that triggers the start of recording, the notes application may alternatively set the flag to other content (for example, a number or another string). This is not limited in this application. For example, in response to the user operation that triggers the start of recording, the notes application may set the flag to 0.

S102: In response to the user operation that triggers the start of recording, the notes application sends an audio data request to an audio framework.

After the notes application receives the user operation that triggers the start of recording, in response to the user operation that triggers the start of recording, the notes application may request the audio framework to collect audio data.

In some embodiments of this application, in response to the user operation that triggers the start of recording, the notes application may send information requesting audio data to the audio framework.

In some embodiments of this application, in response to the user operation that triggers the start of recording, the notes application may invoke a startRecording() method to make recording. In the startRecording() method, an object may be created, an audio source is set to a microphone, and recorded audio data is written into a file in pulse code modulation (Pulse Code Modulation, PCM) format. It can be understood that, steps of making recording by using the startRecording() method may specifically include step S102 to step S106.

It can be understood that a sequence of performing step S101 and step S102 by the electronic device is not limited in this application. The notes application in the electronic device may first perform step S101 and then perform step S102, may first perform step S102 and then perform step S101, or may perform step S101 and step S102 at the same time.

S103: The audio framework configures a recording parameter.

After receiving the request from the notes application to collect audio data, the audio framework may create an object (for example, a MediaRecorder instance or an AudioRecord instance) and configure the recording parameter. It can be understood that the recording parameter may include one or more of the following: an audio source, a format of an output file (that is, an output audio file), a save path of the output file, a sampling rate, an audio channel, and an audio encoder. In some embodiments of this application, the audio framework may set the audio source to a microphone audio source. In this way, the audio data recorded by the notes application is audio data collected by the microphone.

It can be understood that audio sources may include a default audio source, a microphone audio source, a camera audio source, an audio source for speech recognition, a call audio source, and the like. Formats of output files may include a default output format, an MPEG-4 file format, and the like, and may further include an 8-bit PCM encoding format, a 16-bit PCM encoding format, a floating-point PCM encoding format, and the like. Sampling rates may include 44.1 kilohertz (kHz), 22.05 kHz, 16 kHz, 8 kHz, and the like. Audio channels may include mono and stereo. Audio encoders may include a default audio encoder, an AAC encoder, a high-efficiency AAC (HE-AAC) audio encoder, and the like.

It can be understood that a full name of MPEG in English is Moving Picture Experts Group, and a Chinese meaning thereof is a moving picture experts group. MPEG is an organization that specially develops international standards in the multimedia field, and formulates an MPG/MPEG format. At present, MPEG format compression standards include MPEG-1, MPEG-2, and MPEG-4. PCM is one of encoding schemes in digital communication, and a main encoding process of PCM involves sampling analog signals such as voices and images at regular time intervals to discretize the analog signals, quantizing sampled values through rounding based on layer units, and representing an amplitude of a sampling pulse by using the quantized sampled values as a set of binary code.

It can be understood that a full name of AAC is Advanced Audio Coding, and a Chinese meaning thereof is advanced audio coding. AAC is an audio coding technology based on MPEG-2.

S104: The audio framework notifies, via an audio HAL and an audio driver, the microphone to collect audio data.

After configuring the recording parameter, the audio framework may start recording. Because the audio source is set to the microphone, the audio framework may notify, via the audio HAL and the audio driver, the microphone to collect audio data.

Correspondingly, the microphone may receive an audio data collection notification transmitted by the audio framework via the audio HAL and the audio driver.

S105: The microphone collects audio data.

After receiving the audio data collection notification transmitted by the audio framework via the audio HAL and the audio driver, the microphone may collect a sound signal and generate the audio data.

S106: The microphone sends the audio data to the notes application via the audio driver, the audio HAL, and the audio framework.

After collecting the audio data, the microphone may send the audio data to the notes application via the audio driver, the audio HAL, and the audio framework.

It can be understood that in a recording process, step S105 and step S106 are continuously performed. To be specific, the microphone continuously collects audio data, and continuously sends the collected audio data to the notes application.

S107: The notes application sends the audio data to a speech recognition server via a modem.

After receiving the audio data collected by the microphone, the notes application may send the audio data to the modem, and the modem sends the audio data to the speech recognition server.

Correspondingly, the speech recognition server may receive the audio data sent by the modem.

S108: The speech recognition server recognizes the audio data to obtain a speech-to-text result.

After receiving the audio data sent by the modem, the speech recognition server may recognize the audio data, and obtain the corresponding speech-to-text result. It should be noted that the speech-to-text result is marked (or determined/defined) by the speech recognition server.

It can be understood that the speech-to-text result may include text data (which can also be understood as corresponding text) obtained by recognizing the audio data, and a type. The type may be used to indicate whether the text included in the speech-to-text result is recognized text or text that is being recognized. In some embodiments of this application, the speech-to-text result may further include a speaker identifier and the like. The speaker identifier indicates a speaker corresponding to the text data included in the speech-to-text result. It can be understood that the speech-to-text result may further include other parameters (for example, an offset) related to audio and text. This is not limited in this application.

In some embodiments of this application, the type of the speech-to-text result may be represented by "part" or "final". If the type of the speech-to-text result is "part" (for example, the speech-to-text result includes "part", or a field indicative of the type in the speech-to-text result is "part"), it indicates that the text included in the speech-to-text result is text that is being recognized. If the type of the speech-to-text result is "final" (for example, the speech-to-text result includes "final", or a field indicative of the type in the speech-to-text result is "final"), it indicates that the text included in the speech-to-text result is recognized text.

It can be understood that the type of the speech-to-text result may be represented in a form of a text, a string, or the like. This is not specifically limited in this application. For example, the type of the speech-to-text result may be represented by 0 or 1. If the type of the speech-to-text result is 0, it indicates that the text included in the speech-to-text result is text that is being recognized. If the type of the speech-to-text result is 1, it indicates that the text included in the speech-to-text result is recognized text.

In some embodiments of this application, the speech-to-text result of the part type represents an intermediate result mentioned above. The text obtained by processing the speech-to-text result of the part type may be displayed in a display area corresponding to text that is being recognized. For example, as shown in FIG. E to FIG. 6J, the text obtained by processing the speech-to-text result of the part type may be displayed in the in-progress recognition text display area 1033.

In some embodiments of this application, the speech-to-text result of the final type represents a final result mentioned above. The text obtained by processing the speech-to-text result of the final type may be displayed in a display area corresponding to recognized text. For example, as shown in FIG. 6E to FIG. 6J, the text obtained by processing the speech-to-text result of the final type may be displayed in the second speaker text display area 1031, the first speaker text display area 1032, and the third speaker text display area 1035.

It can be understood that in some embodiments of this application, the speech-to-text result may be a user-defined class that includes a plurality of data structures.

S109: The speech recognition server sends the speech-to-text result to the notes application via the modem.

After obtaining the speech-to-text result, the speech recognition server may send the speech-to-text result to the modem of the electronic device, and then the modem sends the speech-to-text result to the notes application. Correspondingly, the notes application may receive the speech-to-text result sent by the speech recognition server.

It can be understood that in the recording process in which the speech-to-text functionality is enabled, step S107 to step S109 are continuously performed. In other words, the notes application may continuously send audio data to the speech recognition server. The speech recognition server may also continuously recognize the audio data to obtain a corresponding speech-to-text result. The speech recognition server may further continuously send the obtained speech-to-text result to the notes application.

In some embodiments of this application, in a plurality of speech-to-text results sent by the speech recognition server to the notes application within a period of time (for example, 5 seconds), a quantity of speech-to-text results of a part type is greater than a quantity of speech-to-text results of a final type. In a possible implementation, each time after sending k speech-to-text results of a part type to the notes application, the speech recognition server sends one speech-to-text result of a final type to the notes application, and then repeatedly performs the action. k is a positive integer greater than 1. It should be noted that each time the speech recognition server performs the action, k may change. For example, within 30s, the speech recognition server first sends five consecutive speech-to-text results of a part type to the notes application, and sends one speech-to-text result of a final type to the notes application; and then sends three consecutive speech-to-text results of a part type to the notes application, and sends one speech-to-text result of a final type to the notes application.

Optionally, after the electronic device performs step S109, at least one of step S201 to step S217 may be further performed.

Optionally, after the electronic device performs step S109, at least one of step S301 to step S308 may be further performed.

2. Process the speech-to-text result (as shown in FIG. 7B).

S201: The notes application determines whether the flag is "true".

After receiving the speech-to-text result sent by the speech recognition server, the notes application may determine whether the flag is "true". If the flag is "true", the electronic device may perform step S214 to step S217. If the flag is not "true", the electronic device may perform step S202 to step S213.

S202: The notes application determines whether the queue is empty.

If the flag is "false" rather than "true", it indicates that the user has not triggered editing at this time. In this case, the notes application may determine whether the queue is empty. If the queue is empty, it indicates that there is no speech-to-text result in the queue, and the electronic device may continue to perform step S204 to step S212. If the queue is not empty, it indicates that there is a speech-to-text result in the queue, and the electronic device may perform step S213.

S203: The notes application processes the speech-to-text result to obtain text data.

If the flag is not "true" and the queue is empty, the notes application may process the speech-to-text result to obtain the corresponding text data.

S204: When a type of the speech-to-text result is "part", the notes application writes the text data obtained through processing into a first speech recognition object, and overwrites original text data in the first speech recognition object.

If the flag is not "true" and the queue is empty, the notes application may determine the type of the speech-to-text result. If the type of the speech-to-text result is "part", it indicates that the speech-to-text result received by the notes application includes text that is being recognized, that is, the text data obtained by processing the speech-to-text result by the notes application is text that is being recognized. In this case, the notes application may write the text data obtained by processing the speech-to-text result (which may be referred to as text data obtained through processing for short) into the first speech recognition object, and overwrites the original text data in the first speech recognition object (which can be understood as replacing the original text data in the first speech recognition object).

It can be understood that, the first speech recognition object may be a speech recognition object mentioned above, and stores text that is being converted from audio data, that is, text that is being recognized. In some embodiments of this application, the first speech recognition object may be a string (string) object.

For example, the original text data in the first speech recognition object may be "01234556", and the text data obtained by processing the speech-to-text result by the notes application may be "01234567". Then, the notes application may write "01234567" into the first speech recognition object, and overwrite "01234556" in the first speech recognition object. In this case, text data in the first speech recognition object changes from "01234556" to "01234567".

In some embodiments of this application, the first speech recognition object may be a string object corresponding to the in-progress recognition text display area 1033. The text stored in the first speech recognition object is displayed in the in-progress recognition text display area 1033.

For example, the original text data in the first speech recognition object may be "123456" in the in-progress recognition text display area 1033 shown in FIG. 6E. When the user has not triggered editing, the notes application may process the speech-to-text result to obtain text data "1234567". The notes application may write "1234567" into the first speech recognition object, and overwrite "123456" originally included in the first speech recognition object. In this case, text data in the first speech recognition object changes from "123456" to "1234567".

For example, the original text data in the first speech recognition object may be "987654" in the in-progress recognition text display area 1033 shown in FIG. 6I and FIG. 6J. When the user has not triggered editing, the notes application may process the speech-to-text result to obtain text data "987654321". The notes application may write "987654321" into the first speech recognition object, and overwrite "987654" originally included in the first speech recognition object. In this case, text data in the first speech recognition object changes from "987654" to "987654321".

S205: The notes application transmits the text data in the first speech recognition object to a display screen.

The notes application may transmit the text data in the first speech recognition object to the display screen. Correspondingly, the display screen may receive the text data that is in the first speech recognition object and that is transmitted by the notes application, that is, the text data obtained by processing the speech-to-text result mentioned in step S203.

S206: The display screen displays the text data in the first speech recognition object.

After receiving the text data that is in the first speech recognition object and that is transmitted by the notes application, the display screen may display the text data in a display area (for example, the in-progress recognition text display area 1033 shown in FIG. 6E, FIG. 6I, and FIG. 6J) corresponding to the first speech recognition object.

For example, the text data obtained by processing the speech-to-text result by the notes application may be "123456", and in this case, the text data that is in the first speech recognition object and that is received by the display screen is "123456". The display screen may display the text data in the display area corresponding to the first speech recognition object, for example, display "123456" in the in-progress recognition text display area 1033 shown in FIG. 6E.

For example, the text data obtained by processing the speech-to-text result by the notes application may be "987654", and in this case, the text data that is in the first speech recognition object and that is received by the display screen is "987654". The display screen may display the text data in the display area corresponding to the first speech recognition object, for example, display "987654" in the in-progress recognition text display area 1033 shown in FIG. 6I and FIG. 6J.

For example, the speech recognition server may first return a speech-to-text result of a part type to the electronic device, where the speech-to-text result includes text "01". After receiving the speech-to-text result, the electronic device may process the speech-to-text result to obtain the text "01". "01" may be displayed in the in-progress recognition text display area 1033. The speech recognition server may further return a speech-to-text result of a part type to the electronic device, where the speech-to-text result includes text "0134". After receiving the speech-to-text result, the electronic device may process the speech-to-text result to obtain the text "0134". "0134" may replace "01" and may be displayed in the in-progress recognition text display area 1033. Similarly, the speech recognition server may further return a speech-to-text result of a part type to the electronic device, where the speech-to-text result includes text "013456". After receiving the speech-to-text result, the electronic device may process the speech-to-text result to obtain the text "013456". "013456" may replace "0134" and may be displayed in the in-progress recognition text display area 1033.

In some embodiments of this application, when the type of the speech-to-text result is "part", the notes application writes the text data obtained through processing into the first speech recognition object, and splices the text data after the original text data in the first speech recognition object.

For example, the speech recognition server may first return a speech-to-text result of a part type to the electronic device, where the speech-to-text result includes text "01". After receiving the speech-to-text result, the electronic device may process the speech-to-text result to obtain the text "01". "01" may be displayed in the in-progress recognition text display area 1033. The speech recognition server may further return a speech-to-text result of a part type to the electronic device, where the speech-to-text result includes text "34". After receiving the speech-to-text result, the electronic device may process the speech-to-text result to obtain the text "34". "34" may be displayed immediately after "01" in the in-progress recognition text display area 1033, that is, text in the in-progress recognition text display area 1033 includes "0134". Similarly, the speech recognition server may further return a speech-to-text result of a part type to the electronic device, where the speech-to-text result includes text "56". After receiving the speech-to-text result, the electronic device may process the speech-to-text result to obtain the text "56". "56" may be displayed immediately after "0134" in the in-progress recognition text display area 1033, that is, text in the in-progress recognition text display area 1033 includes "013456".

S207: When a type of the speech-to-text result is "final" and a speaker corresponding to the speech-to-text result is the same as a speaker corresponding to a second speech recognition object, the notes application adds the text data obtained through processing to the second speech recognition object, where the second speech recognition object is the most recently created object in currently created objects.

If the flag is not "true" and the queue is empty, the notes application may determine the type of the speech-to-text result and the speaker corresponding to the speech-to-text result. If the type of the speech-to-text result is "final", it indicates that the speech-to-text result received by the notes application includes recognized text, that is, the text data obtained by processing the speech-to-text result by the notes application is recognized text. In this case, if the speaker corresponding to the speech-to-text result is the same as the speaker corresponding to the second speech recognition object of the notes application, the notes application may add the text data obtained through processing to the object most recently created by the notes application. The notes application may specifically splice the text data obtained through processing after original text data included in the most recently created object. In other words, text data in the second speech recognition object is the original text data in the second speech recognition object plus the text data obtained by processing the speech-to-text result.

In some embodiments of this application, if the queue is empty, the notes application may first determine the type of the speech-to-text result, and then determine whether the speaker corresponding to the speech-to-text result is the same as the speaker corresponding to the second speech recognition object. That the notes application determines whether the speaker corresponding to the speech-to-text result is the same as the speaker corresponding to the object most recently created by the notes application may specifically include: The notes application may determine whether a speaker identifier included in the speech-to-text result is the same as a speaker identifier corresponding to the second speech recognition object. If the speaker identifier included in the speech-to-text result is the same as the speaker identifier corresponding to the second speech recognition object, it indicates that the speaker corresponding to the speech-to-text result is the same as the speaker corresponding to the second speech recognition object.

In some embodiments of this application, the second speech recognition object may be a string object.

In some embodiments of this application, the second speech recognition object may be a string object corresponding to the second speaker text display area 1031. The text stored in the second speech recognition object is displayed in the second speaker text display area 1031.

For example, as shown in FIG. 6H, the speaker corresponding to the second speech recognition object may be the speaker 2, the corresponding speaker identifier is 2, and the original text data in the second speech recognition object may be "abcde333666888999". After receiving the speech-to-text result, the notes application may determine that the type of the speech-to-text result is "final", the speaker identifier included in the speech-to-text result is 2, and text included in the speech-to-text result is "1234567890", that is, the text data obtained through processing is "1234567890". Then, the notes application may splice the text data obtained through processing after the original text data in the second speech recognition object. In this case, the text data in the second speech recognition object changes to "abcde3336668889991234567890".

In some embodiments of this application, the notes application may invoke a getAsrContent() method to obtain the original text data in the second speech recognition object; then add the text data obtained by processing the speech-to-text result to the second speech recognition object by using an updateToAsrContent() method, to be specific, splice the text data obtained through processing after the original text data in the second speech recognition object, to obtain spliced text data (that is, the original text data in the second speech recognition object+the text data obtained through processing); and finally write the spliced text data into the second speech recognition object by using a setAsrContent() method.

S208: The notes application transmits the text data in the second speech recognition object to the display screen.

The notes application may transmit the text data in the second speech recognition object to the display screen. Correspondingly, the display screen may receive the text data that is in the second speech recognition object and that is transmitted by the notes application, where the received text data includes the original text data in the second speech recognition object and the text data obtained through processing.

S209: The display screen displays the text data in the second speech recognition object.

After receiving the text data that is in the second speech recognition object and that is transmitted by the notes application, the display screen may display the text data in a display area (for example, the second speaker text display area 1031 shown in FIG. E to FIG. 6I) corresponding to the second speech recognition object.

For example, the original text data in the second speech recognition object may be "abcde333666888999", and the text data obtained by processing the speech-to-text result may be "1234567890". The text data that is in the second speech recognition object and that is received by the display screen is obtained by splicing the original text data in the second speech recognition object and the text data obtained through processing, namely, "abcde3336668889991234567890". The display screen may display the spliced text data in the display area corresponding to the second speech recognition object, for example, display "abcde3336668889991234567890" in the second speaker text display area 1031 shown in FIG. 6I.

S210: When a type of the speech-to-text result is "final" and a speaker corresponding to the speech-to-text result is different from a speaker corresponding to a second speech recognition object, the notes application additionally creates a third speech recognition object, and adds the text data obtained through processing to the third speech recognition object.

If the flag is not "true" and the queue is empty, the notes application may determine the type of the speech-to-text result and the speaker corresponding to the speech-to-text result. If the type of the speech-to-text result is "final", it indicates that the speech-to-text result received by the notes application includes recognized text, that is, the text data obtained by processing the speech-to-text result by the notes application is recognized text. In this case, if the speaker corresponding to the speech-to-text result is different from the speaker corresponding to the second speech recognition object, the notes application may additionally create a new object (namely, the third speech recognition object), and add the text data obtained by processing the speech-to-text result to the additionally created object.

In some embodiments of this application, if a speaker identifier included in the speech-to-text result is different from a speaker identifier corresponding to the second speech recognition object, it indicates that the speaker corresponding to the speech-to-text result is different from the speaker corresponding to the object most recently created by the notes application.

In some embodiments of this application, the third speech recognition object may be a string object.

In some embodiments of this application, the third speech recognition object may be a string object corresponding to the third speaker text display area 1035. The text stored in the third speech recognition object is displayed in the third speaker text display area 1035.

For example, as shown in FIG. 6E, the second speech recognition object may be a string object corresponding to the second speaker text display area 1031, the speaker corresponding to the second speech recognition object is the speaker 2, and the corresponding speaker identifier is 2. If the notes application determines, after receiving the speech-to-text result, that the type of the speech-to-text result is "final" and the speaker identifier included in the speech-to-text result is 1, the notes application may create a new string object, and add the recognized text included in the speech-to-text result to the string object.

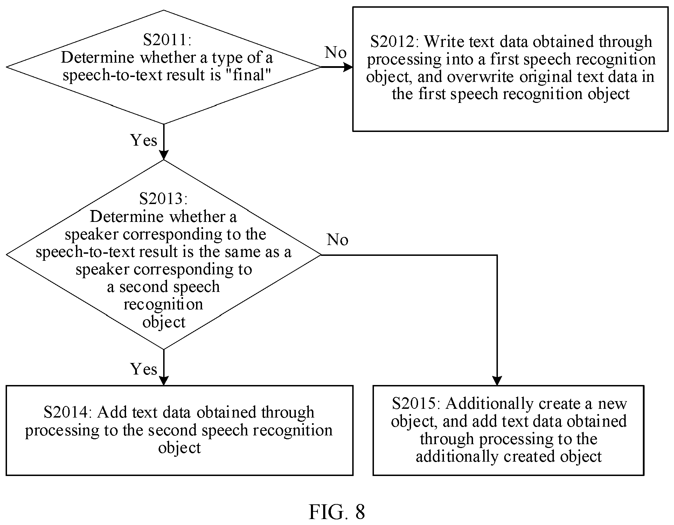

It should be noted that, after determining that the flag is not "true" and the queue is empty, the notes application may perform step S204, step S207, and step S210 based on FIG. 8. As shown in FIG. 8, after determining that the flag is not "true" and the queue is empty, the notes application may perform the following steps.

S2011: The notes application determines whether the type of the speech-to-text result is "final".

If the flag is not "true" and the queue is empty, the notes application may first determine whether the type of the speech-to-text result is "final" or "part". If the type of the speech-to-text result is "final", the notes application may perform step S2013. If the type of the speech-to-text result is not "final" but "part", the notes application may perform S2012.

S2012: The notes application writes the text data obtained through processing into the first speech recognition object, and overwrites the original text data in the first speech recognition object.

If the notes application determines that the type of the speech-to-text result is not "final" but "part", the notes application may write the text data obtained by processing the speech-to-text result into the first speech recognition object, and overwrites the original text data in the first speech recognition object. For a specific implementation, refer to related descriptions in step S204. Details are not described in this application again.

S2013: The notes application determines whether the speaker corresponding to the speech-to-text result is the same as the speaker corresponding to the second speech recognition object.

If the speaker corresponding to the speech-to-text result is the same as the speaker corresponding to the second speech recognition object, the notes application may perform step S2014. If the speaker corresponding to the speech-to-text result is different from the speaker corresponding to the second speech recognition object, the notes application may perform step S2015.

It can be understood that for a specific implementation of step S2013, refer to the foregoing descriptions. Details are not described in this application again.

S2014: The notes application adds the text data obtained through processing to the second speech recognition object.

If the notes application determines that the speaker corresponding to the speech-to-text result is the same as the speaker corresponding to the second speech recognition object, the notes application may add the text data obtained by processing the speech-to-text result to the second speech recognition object. For a specific implementation, refer to related descriptions in step S207. Details are not described in this application again.

S2015: The notes application additionally creates a new object, and adds the text data obtained through processing to the additionally created object.

If the notes application determines that the speaker corresponding to the speech-to-text result is different from the speaker corresponding to the second speech recognition object, the notes application may additionally create a new object (for example, the third speech recognition object), and add the text data obtained by processing the speech-to-text result to the additionally created object.

S211: The notes application transmits text data in the third speech recognition object to the display screen.

The notes application may transmit the text data in the third speech recognition object to the display screen. Correspondingly, the display screen may receive the text data that is in the third speech recognition object and that is transmitted by the notes application, where the received text data includes text data.

S212: The display screen displays the text data in the third speech recognition object.

After receiving the text data that is in the third speech recognition object and that is transmitted by the notes application, the display screen may determine a display area corresponding to the third speech recognition object, and display the text data in the display area corresponding to the third speech recognition object.

For example, the text data in the third speech recognition object from the notes application may be "1234567890". Correspondingly, the text data that is in the third speech recognition object and that is received by the display screen is "1234567890". According to the foregoing descriptions, a speaker identifier corresponding to the third speech recognition object may be 1, that is, a speaker corresponding to the third speech recognition object is the speaker 1. In this case, the display screen may obtain, through division, another display area that is different from the second speaker text display area 1031, the first speaker text display area 1032, and the in-progress recognition text display area 1033 to display the text data in the third speech recognition object. As shown in FIG. 6J, the display screen may display "1234567890" in the third speaker text display area 1035.

S213: The notes application processes the speech-to-text results in the queue in enqueue order, and then processes a newly received speech-to-text result.

If the flag is not "true" and the queue is not empty, the notes application may process the speech-to-text results in the queue in enqueue order of the speech-to-text results in the queue, and then process the newly received speech-to-text result. It can be understood that, for a specific implementation of processing the speech-to-text result, refer to step S204 to step S212. Details are not described herein again in this application.

S214: The notes application places the speech-to-text result into a queue.

If the flag is "true", it indicates that the user has triggered editing at this time, that is, the notes application enters an editing state (or mean that the electronic device enters the editing state). In this case, the notes application may place the speech-to-text result into the queue.

In some embodiments of this application, regardless of whether the type of the speech-to-text result received by the notes application is "part" or "final", the notes application may place the speech-to-text result into the queue.

In some embodiments of this application, when the type of the speech-to-text result received by the notes application is "final", the notes application may place the speech-to-text result into the queue. When the type of the speech-to-text result received by the notes application is "part", the notes application may not place the speech-to-text result into the queue, but directly perform processing according to step S204.

S215: When a type of the speech-to-text result is "final", the notes application processes the speech-to-text result to obtain text data; and if original text data in a first speech recognition object is obtained by processing a speech-to-text result of a part type, overwrites the original text data in the first speech recognition object by the text data obtained by processing the speech-to-text result; or if original text data in a first speech recognition object is obtained by processing a speech-to-text result of a final type, adds the text data obtained by processing the speech-to-text result to the first speech recognition object.

If the flag is "true", the notes application may determine the type of the speech-to-text result. If the type of the speech-to-text result is "part", the notes application may place the speech-to-text result into the queue. If the type of the speech-to-text result is "final", the notes application may place the speech-to-text result into the queue, and may also process the speech-to-text result to obtain the corresponding text data. Further, the notes application may determine whether the original text data in the first speech recognition object is text data obtained by processing the speech-to-text result whose corresponding type is "part" or text data obtained by processing the speech-to-text result whose corresponding type is "final". If the original text data in the first speech recognition object is text data obtained by processing the speech-to-text result whose corresponding type is "part", the notes application may write the corresponding text data obtained by processing the speech-to-text result into the first speech recognition object, and overwrite the original text data in the first speech recognition object. This can also be understood as replacing the original text data in the first speech recognition object with the corresponding text data obtained by processing the speech-to-text result. If the original text data in the first speech recognition object is text data obtained by processing the speech-to-text result whose corresponding type is "final", the notes application may splice the corresponding text data obtained by processing the speech-to-text result after the original text data in the first speech recognition object. In this case, text data in the first speech recognition object is the original text data in the first speech recognition object plus the corresponding text data obtained by processing the speech-to-text result.

For example, as shown in FIG. 6E and FIG. 6F, the original text data in the first speech recognition object is "123456", and is text data obtained by processing the speech-to-text result whose corresponding type is "final". Text data obtained by processing the newly received speech-to-text result may be "123456789". The notes application may write "123456789" into the first speech recognition object, and overwrite the original text data in the first speech recognition object. In this case, the text data in the first speech recognition object changes from "123456" to "123456789".

In some embodiments of this application, if the flag is "true" and the type of the speech-to-text result is "final". The notes application may process the speech-to-text result to obtain corresponding text data, write the corresponding text data into the first speech recognition object, and overwrite the original text data in the first speech recognition object.

In some embodiments of this application, if the flag is "true", the notes application may perform step S214.

It should be noted that, after the notes application exits the editing state (for example, the flag is reset from "true" to "false"), if the queue is not empty, the notes application may perform step S213.

S216: The notes application transmits the text data in the first speech recognition object to the display screen.

The notes application may transmit the text data in the first speech recognition object to the display screen. Correspondingly, the display screen may receive the text data that is in the first speech recognition object and that is transmitted by the notes application.

S217: The display screen displays the text data in the first speech recognition object.

After receiving the text data that is in the first speech recognition object and that is transmitted by the notes application, the display screen may display the text data in a display area (for example, the in-progress recognition text display area 1033 shown in FIG. 6F to FIG. 6H) corresponding to the first speech recognition object.

For example, as shown in FIG. 6E, when the user has not triggered editing, after receiving the speech-to-text result whose corresponding type is "part", the notes application may perform processing on the speech-to-text result according to step S204, and send the text data in the first speech recognition object obtained through processing to the display screen. Correspondingly, the display screen may display, in the display area (for example, the in-progress recognition text display area 1033) corresponding to the first speech recognition object, the text data included in the speech-to-text result, namely, "123456". As shown in FIG. 6G, when the user has triggered editing, the notes application receives the speech-to-text result whose corresponding type is "final", and may process the speech-to-text result to obtain corresponding text data, namely, "123456789". Because the original text data in the first speech recognition object is "123456", and is text data obtained by processing the speech-to-text result whose corresponding type is "part", the notes application may directly write "123456789" into the first speech recognition object, overwrite "123456" in the first speech recognition object, and send "123456789" to the display screen. Correspondingly, as shown in FIG. 6G, the text data displayed by the display screen in the display area corresponding to the first speech recognition object may change to "123456789".

It should be noted that, when the flag is "true", the electronic device may alternatively process and display the speech-to-text result in another manner. Similarly, when the flag is not "true" and the queue is not empty, the electronic device may alternatively process the speech-to-text result in the queue in another manner. When the flag is "true", and when the flag is not "true" and the queue is not empty, for a specific processing manner and display manner of the speech-to-text result, refer to Table 1.

**Table 1**

| Speech-to-text results placed into a queue in an editing process | Processing manner and display manner of the received speech-to-text results in the editing process | Processing manner and display manner of the speech-to-text results in the queue after editing is exited |
|---|---|---|
| Part-type speech-to-text result and final-type speech-to-text result | Process the part-type speech-to-text result, and display text data obtained by processing the part-type speech-to-text result (refer to step S204 to step S206) | Discard the part-type speech-to-text result, process the final-type speech-to-text result, and display text data obtained by processing the final-type speech-to-text result (refer to step S207 to step S213) |
| | | Process the part-type speech-to-text result and the final-type speech-to-text result, display text obtained by processing the part-type speech-to-text result, and display text data obtained by processing the final-type speech-to-text result (refer to step S204 to step S213) |
| | Process the final-type speech-to-text result, and display text data obtained by processing the final-type speech-to-text result (refer to step S207to step S213) | Discard the part-type speech-to-text result, process the final-type speech-to-text result, and display text obtained by processing the final-type speech-to-text result (refer to step S207 to step S213) |
| | | Process the part-type speech-to-text result and the final-type speech-to-text result, display text data obtained by processing the part-type speech-to-text result, and display text data obtained by processing the final-type speech-to-text result (refer to step S204 to step S213) |
| | Process the part-type speech-to-text result and the final-type speech-to-text result, display text data obtained by processing the part-type speech-to-text result, and display text data obtained by processing the final-type speech-to-text result (refer to step S204 to step S213) | Discard the part-type speech-to-text result, process the final-type speech-to-text result, and display text data obtained by processing the final-type speech-to-text result (refer to step S207 to step S213) |
| | | Process the part-type speech-to-text result and the final-type speech-to-text result, display text data obtained by processing the part-type speech-to-text result, and display text data obtained by processing the final-type speech-to-text result (refer to step S204 to step S213) |
| Final-type speech-to-text result (part-type speech-to-text result is not enqueued) | Process the part-type speech-to-text result and then discard the result (the part-type speech-to-text result is not enqueued), and display text data obtained by processing the part-type speech-to-text result (refer to step S204 to step S206) | Process the final-type speech-to-text result, and display text data obtained by processing the final-type speech-to-text result (refer to step S207 to step S213) |
| | Process the final-type speech-to-text result, and display text data obtained by processing the final-type speech-to-text result (refer to step S207 to step S213) | Process the final-type speech-to-text result, and display text data obtained by processing the final-type speech-to-text result (refer to step S207 to step S213) |
| | Process the part-type speech-to-text result and then discard the result, process the final-type speech-to-text result, display text data obtained by processing the part-type speech-to-text result, and display text data obtained by processing the final-type speech-to-text result (refer to step S204 to step S213) | Process the final-type speech-to-text result, and display text data obtained by processing the final-type speech-to-text result (refer to step S207 to step S213) |

As listed in Table 1, in some embodiments of this application, when the flag is "true" (that is, in the editing process), the notes application may place a received part-type speech-to-text result (or referred to as a speech-to-text result of a part type) and a received final-type speech-to-text result (or referred to as a speech-to-text result of a final type) into a queue. Further, when the flag is "true" (that is, in the editing process), the notes application may use any one of the following three processing and display manners for the received speech-to-text results.

Processing and display manner 1 in the editing process: When the flag is "true" (that is, in the editing process), the notes application may not process a received final-type speech-to-text result, but process a received part-type speech-to-text result according to a receiving order, write text data obtained through processing into the first speech recognition object, overwrite the original text data in the first speech recognition object, and then display text data in the first speech recognition object on the display screen. It can be understood that for a specific implementation of the manner 1, refer to related descriptions in step S204 to step S206.

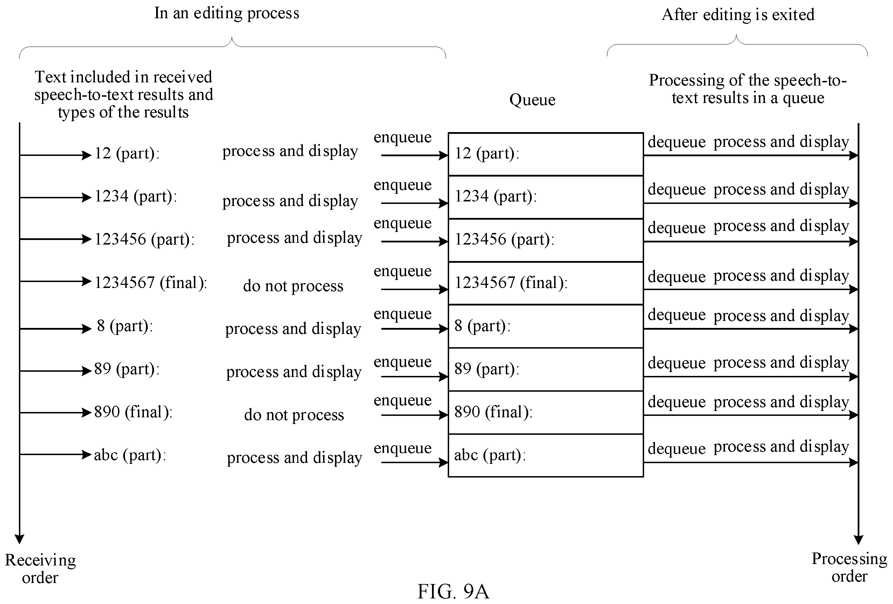

For example, as shown in FIG. 9A, in an editing process, the notes application sequentially receives a part-type speech-to-text result including text "12", a part-type speech-to-text result including text "1234", a part-type speech-to-text result including text "123456", a final-type speech-to-text result including text "1234567", a part-type speech-to-text result including text "8", a part-type speech-to-text result including text "89", a final-type speech-to-text result including text "890", and a part-type speech-to-text result including text "abc", and sequentially places the received speech-to-text results into a queue. It can be understood that in the editing process, the notes application processes only the part-type speech-to-text results, and displays text data obtained through processing on the display screen. Specifically, the notes application first receives the part-type speech-to-text result including the text "12", places the result into the queue, and processes the result to obtain the text "12". The text "12" may be displayed in the in-progress recognition text display area 1033. The notes application then receives the part-type speech-to-text result including the text "1234", places the result into the queue, and processes the result to obtain the text "1234". The text "1234" may replace the text "12" and may be displayed in the in-progress recognition text display area 1033. The notes application then receives the part-type speech-to-text result including the text "123456", places the result into the queue, and processes the result to obtain the text "123456". The text "123456" may replace the text "1234" and may be displayed in the in-progress recognition text display area 1033. The notes application then receives the final-type speech-to-text result including the text "1234567", places the result into the queue, but does not process the result. The notes application then receives the part-type speech-to-text result including the text "8", places the result into the queue, and processes the result to obtain the text "8". The text "8" may replace the text "123456" and may be displayed in the in-progress recognition text display area 1033. The notes application then receives the part-type speech-to-text result including the text "89", places the result into the queue, and processes the result to obtain the text "89". The text "89" may replace the text "8" and may be displayed in the in-progress recognition text display area 1033. The notes application then receives the final-type speech-to-text result including the text "890", places the result into the queue, but does not process the result. The notes application then receives the part-type speech-to-text result including the text "abc", may place the result into the queue, and processes the result to obtain the text "abc". The text "abc" may replace the text "89" and may be displayed in the in-progress recognition text display area 1033.

Processing and display manner 2 in the editing process: When the flag is "true" (that is, in the editing process), the notes application may not process a received part-type speech-to-text result, but process a received final-type speech-to-text result according to a receiving order to obtain text data. If the original text data in the first speech recognition object is obtained by processing a final-type speech-to-text result, the notes application may add the text data obtained by processing the received final-type speech-to-text result after the original text data in the first speech recognition object. If the original text data in the first speech recognition object is obtained by processing a part-type speech-to-text result, the notes application may overwrite the original text data in the first speech recognition object by the text data obtained by processing the received final-type speech-to-text result. After completing the foregoing processing, the notes application may display text data in the first speech recognition object on the display screen. It can be understood that for a specific implementation of the manner 2, refer to related descriptions in step S215 to step S217.

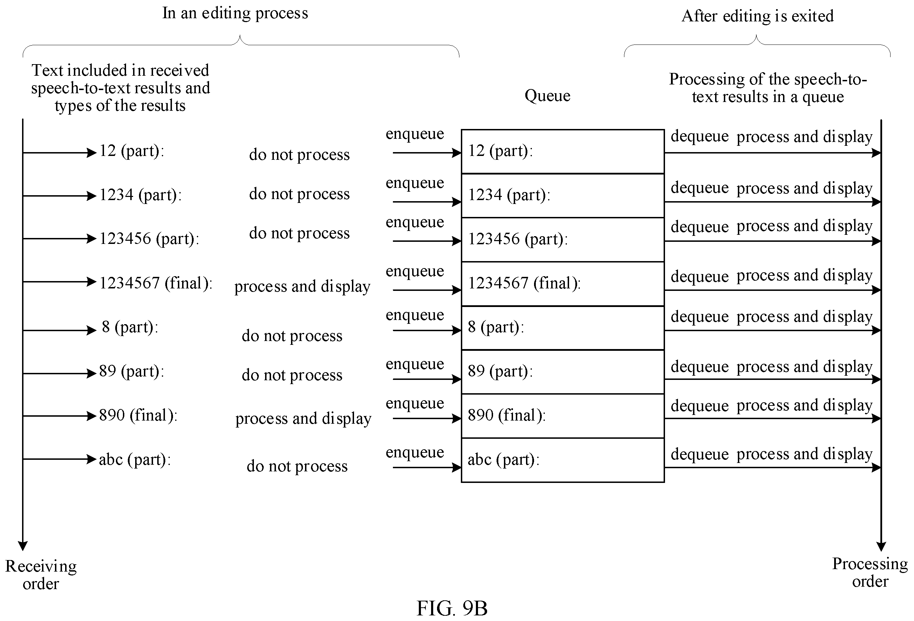

For example, an order in which the notes application receives the speech-to-text results shown in FIG. 9B is the same as that shown in FIG. 9A, and an enqueue order of the speech-to-text results shown in FIG. 9B is also the same as that shown in FIG. 9A. A difference is that, as shown in FIG. 9B, in an editing process, the notes application processes only received final-type speech-to-text results, but does not process received part-type speech-to-text results. Specifically, after receiving a part-type speech-to-text result including text "12", a part-type speech-to-text result including text "1234", and a part-type speech-to-text result including text "123456", the notes application may directly place the results into a queue, and does not process the results. After subsequently receiving a final-type speech-to-text result including text "1234567", the notes application may place the result into the queue, and processes the result to obtain the text "1234567". The text "1234567" may be displayed in the in-progress recognition text display area 1033. The notes application then receives a part-type speech-to-text result including text "8" and a part-type speech-to-text result including text "89", places the results into the queue, and does not process the results. After subsequently receiving a final-type speech-to-text result including text "890", the notes application places the result into the queue, and processes the result to obtain the text "890". The text "890" may be displayed immediately after the text "1234567" in the in-progress recognition text display area 1033, that is, "1234567890" is displayed in the in-progress recognition text display area 1033. The notes application may then receive a part-type speech-to-text result including text "abc", places the result into the queue, and does not process the result.

Processing and display manner 3 in the editing process: When the flag is "true" (that is, in the editing process), the notes application may process a received part-type speech-to-text result and a received final-type speech-to-text result according to a receiving order, write text data obtained through processing into the first speech recognition object, overwrite the original text data in the first speech recognition object, and then display text data in the first speech recognition object on the display screen. It can be understood that for a specific implementation of overwriting the original text data, refer to related descriptions in step S204 to step S206.

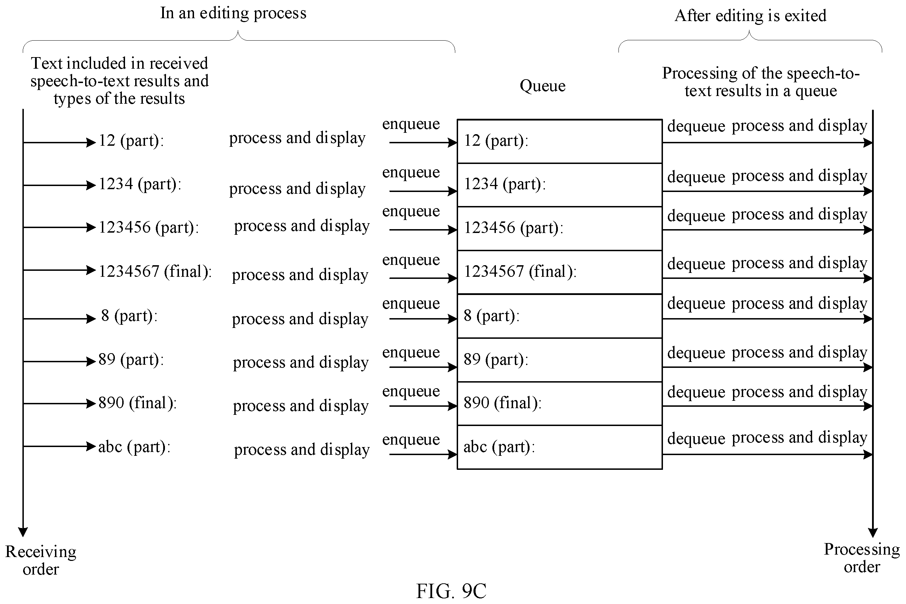

For example, an order in which the notes application receives the speech-to-text results shown in FIG. 9C is the same as those shown in FIG. 9A and FIG. 9B, and an enqueue order of the speech-to-text results shown in FIG. 9C is also the same as those shown in FIG. 9A and FIG. 9B. A difference is that, as shown in FIG. 9C, in an editing process, the notes application processes received final-type speech-to-text results and received part-type speech-to-text results, and sends text obtained through processing to the display screen for display. Specifically, as shown in FIG. 9C, the notes application may first receive a part-type speech-to-text result including text "12", and processes the result to obtain the text "12". The text "12" may be displayed in the in-progress recognition text display area 1033. Similarly, the notes application may then receive a part-type speech-to-text result including text "1234", and processes the result to obtain the text "1234". The text "1234" may replace the text "12" and may be displayed in the in-progress recognition text display area 1033. Similarly, the notes application may then receive a part-type speech-to-text result including text "123456", and processes the result to obtain the text "123456". The text "123456" may replace the text "1234" and may be displayed in the in-progress recognition text display area 1033. Similarly, the notes application may then receive a final-type speech-to-text result including text "1234567", and processes the result to obtain the text "1234567". The text "1234567" may replace the text "123456" and may be displayed in the in-progress recognition text display area 1033. Similarly, the notes application may then receive a part-type speech-to-text result including text "8", and processes the result to obtain the text "8". The text "8" may replace the text "1234567" and may be displayed in the in-progress recognition text display area 1033. Similarly, the notes application may then receive a part-type speech-to-text result including text "89", and processes the result to obtain the text "89". The text "89" may replace the text "8" and may be displayed in the in-progress recognition text display area 1033. Similarly, the notes application may then receive a final-type speech-to-text result including text "890", and processes the result to obtain the text "890". The text "890" may replace the text "89" and may be displayed in the in-progress recognition text display area 1033. Similarly, the notes application may then receive a part-type speech-to-text result including text "abc", and processes the result to obtain the text "abc". The text "abc" may replace the text "890" and may be displayed in the in-progress recognition text display area 1033.

Further, when the notes application uses any one of the foregoing processing and display manners (the processing and display manner 1 in the editing process, the processing and display manner 2 in the editing process, or the processing and display manner 3 in the editing process) for the speech-to-text results received in the editing process, after editing is exited (which may specifically mean that the flag is not "true" and the queue is not empty), the notes application may use any one of the following two processing and display manners for the speech-to-text results in the queue.

Processing and display manner 1 after editing is exited: When the flag is not "true" and the queue is not empty, the notes application may discard a part-type speech-to-text result in the queue, and process a final-type speech-to-text result in the queue in enqueue order. For details of the processing manner and the subsequent display manner, refer to related descriptions in step S207 to step S212.

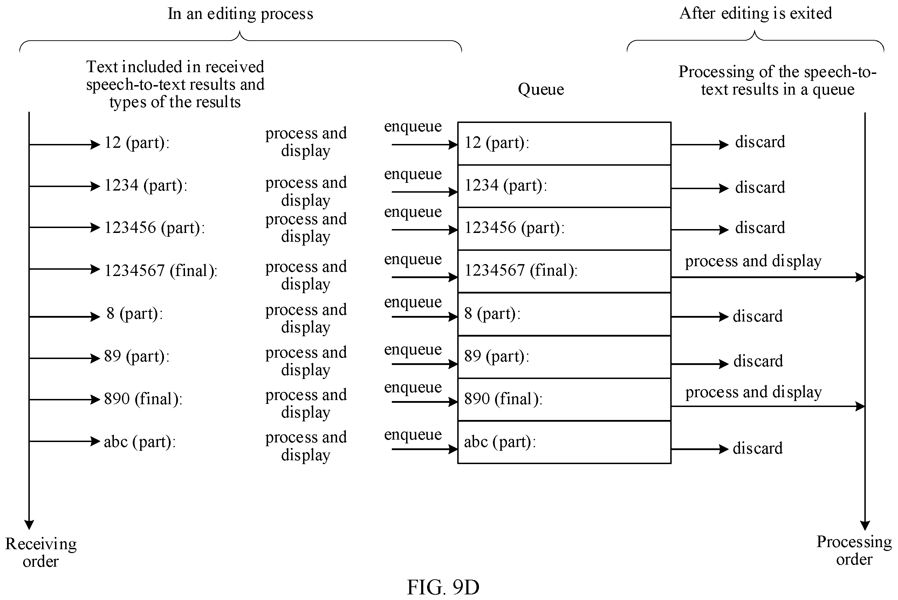

For example, as shown in FIG. 9D, in an editing process, the notes application processes received final-type speech-to-text results and received part-type speech-to-text results, and sends text obtained through processing to the display screen for display. For a specific processing and display process, refer to related descriptions in FIG. 9C. Details are not described herein again in this application. As shown in FIG. 9D, after editing is exited, according to an enqueue order, speech-to-text results in a queue include: a part-type speech-to-text result including text "12", a part-type speech-to-text result including text "1234", a part-type speech-to-text result including text "123456", a final-type speech-to-text result including text "1234567", a part-type speech-to-text result including text "8", a part-type speech-to-text result including text "89", a final-type speech-to-text result including text "890", and a part-type speech-to-text result including text "abc". After editing is exited, the notes application may discard the part-type speech-to-text results in the queue and process the final-type speech-to-text results in the queue in enqueue order. Specifically, the notes application may determine that a type of the speech-to-text result including the text "12" that is first enqueued is "part", and discard the speech-to-text result. Similarly, the notes application may discard the part-type speech-to-text result including the text "1234" and the part-type speech-to-text result including the text "123456". The notes application may determine that a type of the speech-to-text result including the text "1234567" that is enqueued next is "final", and process the result to obtain the text "1234567". In this case, the notes application may determine whether a speaker corresponding to the speech-to-text result is the speaker corresponding to the second speech recognition object. If the speaker corresponding to the speech-to-text result is the speaker corresponding to the second speech recognition object, the notes application may add the text "1234567" after the original text in the second speech recognition object. If the speaker corresponding to the speech-to-text result is not the speaker corresponding to the second speech recognition object, the notes application may additionally create a speech recognition object (for example, the third speech recognition object), and add the text "1234567" to the additionally created speech recognition object. Similarly, the notes application may then discard the part-type speech-to-text result including the text "8" and the part-type speech-to-text result including the text "89", process the final-type speech-to-text result including the text "890", and discard the part-type speech-to-text result including the text "abc". For a processing and display process of the final-type speech-to-text result including the text "890", refer to the processing and display process of the final-type speech-to-text result including the text "1234567". Details are not described herein again in this application.

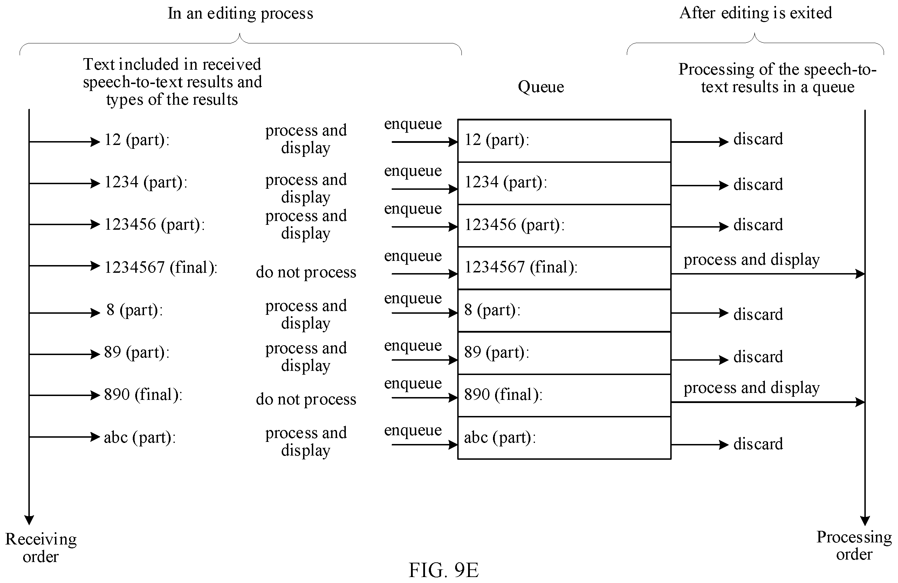

For example, as shown in FIG. 9E, in an editing process, the notes application may process received part-type speech-to-text results, and send text obtained through processing to the display screen for display, but does not process final-type speech-to-text results. For a specific processing and display process, refer to related descriptions in FIG. 9A. Details are not described herein again in this application. For a processing and display process that is of speech-to-text results in a queue after editing is exited and that is shown in FIG. 9E, refer to related descriptions in FIG. 9D. Details are not described herein again in this application.

Processing and display manner 2 after editing is exited: When the flag is not "true" and the queue is not empty, the notes application may process a part-type speech-to-text result and a final-type speech-to-text result in the queue in enqueue order. For details of the processing manner and the subsequent display manner, refer to related descriptions in step S204 to step S212.

For example, as shown in FIG. 9A to FIG. 9C, after editing is exited, the notes application may process the part-type speech-to-text results in the queue and the final-type speech-to-text results in the queue in enqueue order, that is, sequentially process the following speech-to-text results: the part-type speech-to-text result including the text "12", the part-type speech-to-text result including the text "1234", the part-type speech-to-text result including the text "123456", the final-type speech-to-text result including the text "1234567", the part-type speech-to-text result including the text "8", the part-type speech-to-text result including the text "89", the final-type speech-to-text result including the text "890", and the part-type speech-to-text result including the text "abc". Each time after obtaining text included in a corresponding speech-to-text result through processing, the notes application may send the text obtained through processing to the display screen for display. For a specific processing and display process, refer to steps S204 to S212. Details are not described herein again in this application.

In some other embodiments of this application, when the flag is "true" (that is, in the editing process), the notes application may place a received final-type speech-to-text result into a queue instead of placing a part-type speech-to-text result into the queue. Further, when the flag is "true" (that is, in the editing process), the notes application may use the processing and display manner 1 in the editing process, the processing and display manner 2 in the editing process, or the processing and display manner 3 in the editing process for the received speech-to-text results. It should be noted that, after processing the part-type speech-to-text result in any one of the foregoing processing and display manners in the editing process, the notes application may discard the part-type speech-to-text result and does not place the result into the queue. Further, after editing is exited (which may specifically mean that the flag is not "true" and the queue is not empty), the queue includes only the final-type speech-to-text result and includes no part-type speech-to-text result. In this case, the notes application may process the speech-to-text result in the queue in enqueue order, and send text obtained through processing to the display screen for display. It can be understood that for details of the processing and display process, refer to related descriptions in step S207 to step S212.

For example, when the flag is "true", the notes application may process the received part-type speech-to-text result in the processing and display manner 1 in the editing process, and send text obtained through processing to the display screen for display, but discards the part-type speech-to-text result and does not place the result into the queue after the processing. Specifically, when the flag is "true", the notes application may process the received part-type speech-to-text result and then discard the result, write text data obtained through processing into the first speech recognition object, overwrite the original text data in the first speech recognition object, and then display text data in the first speech recognition object on the display screen. In contrast, the notes application does not process the final-type speech-to-text result, but places the result into the queue. Further, subsequently, when the flag is not "true" and the queue is not empty, the queue includes only the final-type speech-to-text result, and the notes application may process the final-type speech-to-text result in the queue in enqueue order.

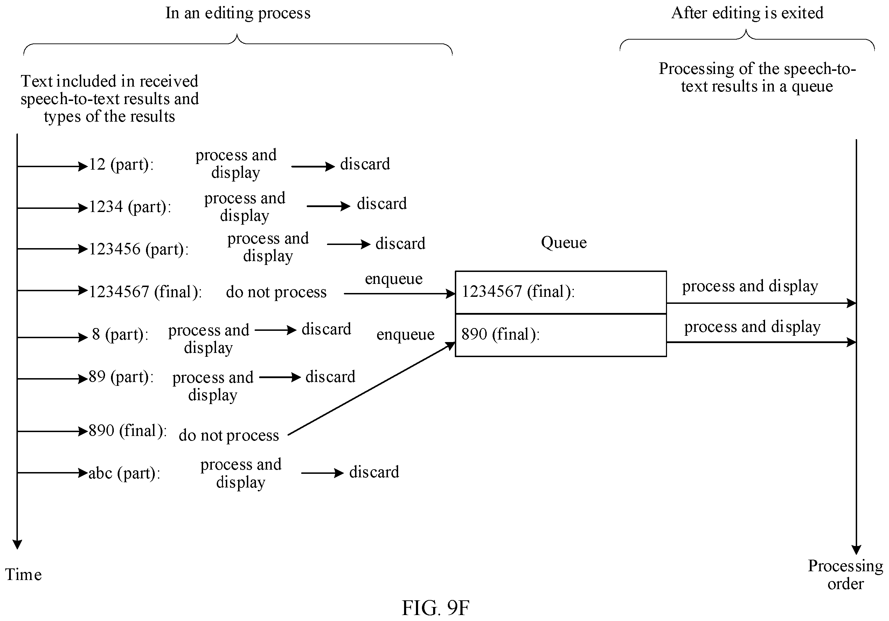

For example, an order in which the notes application receives the speech-to-text results shown in FIG. 9F is the same as those shown in FIG. 9A to FIG. 9E, and a processing and display process of the received speech-to-text results shown in FIG. 9F is the same as that shown in FIG. 9A. A difference is that, as shown in FIG. 9F, after processing part-type speech-to-text results, the notes application may directly discard the results and does not place the results into a queue. Specifically, after processing a part-type speech-to-text result including text "12", a part-type speech-to-text result including text "1234", and a part-type speech-to-text result including text "123456", the notes application may discard the results and does not place the results into the queue. The notes application may then place a final-type speech-to-text result including text "1234567" into the queue, and does not process the result. The notes application may then process a part-type speech-to-text result including text "8" and a part-type speech-to-text result including text "89", and discards the results and does not place the results into the queue after the processing. The notes application may then place a final-type speech-to-text result including text "890" into the queue, and does not process the result. The notes application may then process a part-type speech-to-text result including text "abc", and discards the result and does not place the result into the queue after the processing. It can be understood that, for a processing and display process of the part-type speech-to-text results in the editing process, refer to related descriptions in FIG. 9A.

Similarly, when the flag is "true", the notes application may process the received final-type speech-to-text result in the processing and display manner 2 in the editing process, and send text obtained through processing to the display screen for display; and discards the part-type speech-to-text result, and neither processes the result nor places the result into the queue.

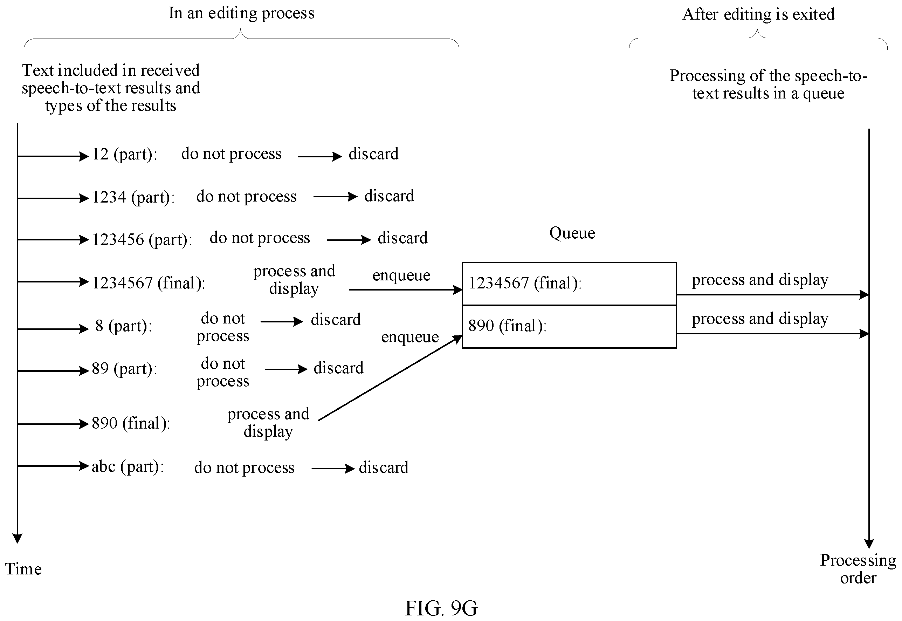

For example, an order in which the notes application receives the speech-to-text results shown in FIG. 9G is the same as those shown in FIG. 9A to FIG. 9F, and a processing and display process of the received speech-to-text results shown in FIG. 9G is the same as that shown in FIG. 9B. A difference is that, as shown in FIG. 9G, after processing part-type speech-to-text results, the notes application may directly discard the results and does not place the results into a queue. Specifically, the notes application directly discards a received part-type speech-to-text result including text "12", a received part-type speech-to-text result including text "1234", and a received part-type speech-to-text result including text "123456", and neither processes the results nor places the results into the queue. The notes application may then place a received final-type speech-to-text result including text "1234567" into the queue, and process the result to obtain the text "1234567". The text "1234567" may be displayed in the in-progress recognition text display area 1033. The notes application may then directly discard a received part-type speech-to-text result including text "8" and a received part-type speech-to-text result including text "89", and neither processes the results nor places the results into the queue. The notes application may then place a received final-type speech-to-text result including text "890" into the queue, and process the result to obtain the text "890". The text "890" may be displayed immediately after the text "1234567" in the in-progress recognition text display area 1033, that is, text "1234567890" is displayed in the in-progress recognition text display area 1033. The notes application may then directly discard a received part-type speech-to-text result including text "abc", and neither processes the result nor places the result into the queue.

Similarly, when the flag is "true", the notes application may process the received final-type speech-to-text result and the received part-type speech-to-text result in the processing and display manner 3 in the editing process, and send text obtained through processing to the display screen for display; but discards the part-type speech-to-text result and does not place the result into the queue.

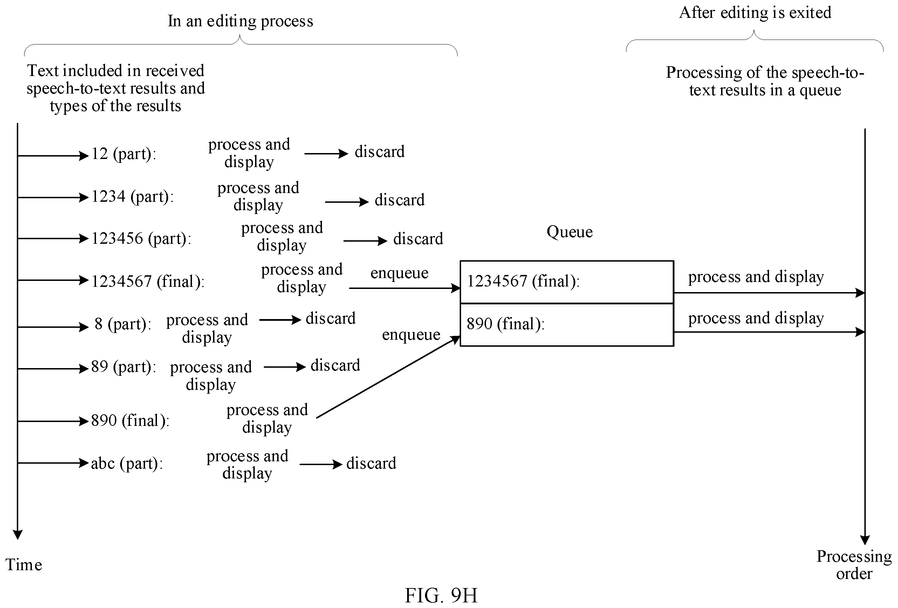

For example, an order in which the notes application receives the speech-to-text results shown in FIG. 9H is the same as those shown in FIG. 9A to FIG. 9F, and a processing and display process of the received speech-to-text results shown in FIG. 9H is the same as that shown in FIG. 9C. A difference is that, as shown in FIG. 9G, after processing part-type speech-to-text results, the notes application may directly discard the results and does not place the results into a queue. Specifically, the notes application may process a part-type speech-to-text result including text "12", a part-type speech-to-text result including text "1234", and a part-type speech-to-text result including text "123456", send text obtained through processing to the display screen for display, and discards the results and does not place the results into the queue after the processing. The notes application may then process a final-type speech-to-text result including text "1234567", place the result into the queue, and send text obtained through processing to the display screen for display. The notes application may then process a part-type speech-to-text result including text "8" and a part-type speech-to-text result including text "89", and discards the results and does not place the results into the queue after the processing. The notes application may then process a final-type speech-to-text result including text "890", place the result into the queue, and send text obtained through processing to the display screen for display. The notes application may then process a part-type speech-to-text result including text "abc", and discards the result and does not place the result into the queue after the processing. It can be understood that, for a processing and display process of the part-type speech-to-text results in the editing process, refer to related descriptions in FIG. 9C.

For example, as shown in FIG. 9F to FIG. 9H, in the editing process, the notes application places only the final-type speech-to-text result including the text "1234567" and the final-type speech-to-text result including the text "890" into the queue. After editing is exited, the queue includes only the final-type speech-to-text result including the text "1234567" and the final-type speech-to-text result including the text "890". The notes application may first process the final-type speech-to-text result including the text "1234567" and then process the final-type speech-to-text result including the text "890" in the enqueue order. It can be understood that, for a processing and display process of the final-type speech-to-text results, refer to related descriptions in FIG. 9D and step S207 to step S212.

It should be noted that in some embodiments of this application, if a function of displaying speakers is enabled, the electronic device may perform steps shown in FIG. 7B. In some embodiments of this application, if a function of displaying speakers is not enabled, the electronic device may not perform step S207 to step S209, and step S210 to step S212.

It should be noted that the first speech recognition object, the second speech recognition object, and the third speech recognition object in this application can be understood as different speech recognition objects. In some embodiments of this application, the text stored in the first speech recognition object may be displayed in the in-progress recognition text display area 1033. It can also be understood that the display area corresponding to the first speech recognition object is the in-progress recognition text display area 1033. In some embodiments of this application, the text stored in the second speech recognition object may be displayed in the second speaker text display area 1031. It can also be understood that the display area corresponding to the second speech recognition object is the second speaker text display area 1031. In some embodiments of this application, the text stored in the third speech recognition object may be displayed in the third speaker text display area 1035. It can also be understood that the display area corresponding to the third speech recognition object is the third speaker text display area 1035.

It can be understood that the text included in the first speech recognition object, the second speech recognition object, and the third speech recognition object may be identical or different. In some embodiments of this application, the first speech recognition object, the second speech recognition object, and the third speech recognition object may all be string objects. In a process in which the notes application implements speech-to-text, the notes application may further create more speech recognition objects. This is not limited in this application.

It can be understood that the notes application may create an object for storing all recognized text. For ease of description, in this application, the object for storing all recognized texts is referred to as a recognized text object. When the function of displaying speakers is not enabled, if a type of a speech-to-text result is "final", the notes application may directly add text data obtained by processing the speech-to-text result to the recognized text object. Specifically, the notes application may splice the text data after original text data in the recognized text object, and then display text data in the recognized text object on the display screen.

In some embodiments of this application, when the user triggers enabling of the speech-to-text functionality or the electronic device enables the speech-to-text functionality, the notes application may create the recognized text object.

Optionally, after the electronic device performs step S217, at least one of step S301 to step S308 may be further performed.

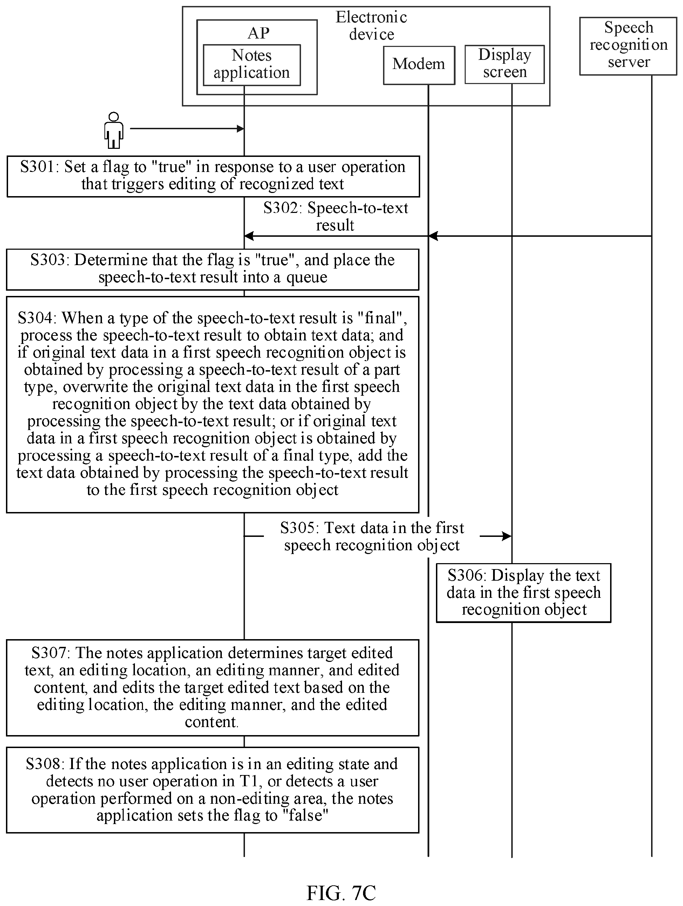

3. The user edits recognized text, and places a newly received speech-to-text result into the queue (as shown in FIG. 7C).

S301: The notes application sets the flag to "true" in response to a user operation that triggers editing of recognized text.

The user may trigger editing of the recognized text by tapping a display area corresponding to the recognized text, that is, trigger the notes application to enter the editing state. For example, as shown in FIG. 6E, the user may trigger editing of text in the second speaker text display area 1031 by tapping the second speaker text display area 1031. Correspondingly, the notes application may receive the user operation of tapping the second speaker text display area 1031, and enter the editing state.

Certainly, the user may alternatively trigger editing of the recognized text through gesture, voice control, or the like. This is not limited in this application.

After the notes application detects the user operation that triggers editing of the recognized text, in response to the user operation, the notes application may set the flag from "false" to "true".

For example, in response to the user operation of editing the recognized text, the notes application may set isEditByUser=true.

S302: The speech recognition server sends the speech-to-text result to the notes application via the modem.

According to the foregoing descriptions, the speech recognition server may continuously send speech-to-text results to the notes application via the modem. Correspondingly, the notes application may continuously receive the speech-to-text result that is sent by the speech recognition server via the modem.

S303: The notes application determines that the flag is "true", and places the speech-to-text result into the queue.

According to step S201, after receiving the speech-to-text result sent by the speech recognition server, the notes application may determine whether the flag is "true". It can be understood that, after the user triggers editing of the recognized text, the notes application sets the flag to "true". Therefore, after receiving the speech-to-text result, the notes application may determine that the flag is "true", and place the speech-to-text result into the queue. For a specific implementation thereof, refer to step S214. Details are not described in this application again.

S304: When a type of the speech-to-text result is "final", the notes application processes the speech-to-text result to obtain text data; and if original text data in a first speech recognition object is obtained by processing a speech-to-text result of a part type, overwrites the original text data in the first speech recognition object by the text data obtained by processing the speech-to-text result; or if original text data in a first speech recognition object is obtained by processing a speech-to-text result of a final type, adds the text data obtained by processing the speech-to-text result to the first speech recognition object.

After the user triggers editing of the recognized text, the notes application sets the flag to "true". Therefore, after receiving the speech-to-text result, the notes application may determine that the flag is "true". In this case, if the type of the speech-to-text result is "part", the notes application may place the speech-to-text result into the queue. If the type of the speech-to-text result is "final", the notes application may place the speech-to-text result into the queue, and may also process the speech-to-text result to obtain the corresponding text data. If the original text data in the first speech recognition object is text data obtained by processing the speech-to-text result whose corresponding type is "part", the notes application may overwrite the original text data in the first speech recognition object by the corresponding text data. If the original text data in the first speech recognition object is text data obtained by processing the speech-to-text result whose corresponding type is "final", the notes application may add the corresponding text data after the original text data in the first speech recognition object.

It can be understood that for a specific implementation of step S304, refer to related descriptions in step S215. Details are not described herein again in this application.

S305: The notes application transmits text data in the first speech recognition object to the display screen.

S306: The display screen displays the text data in the first speech recognition object.

It can be understood that for a specific implementation of step S305 and step S306, refer to related descriptions in step S216 to step S217. Details are not described herein again in this application.

S307: The notes application determines target edited text, an editing location, an editing manner, and edited content, and edits the target edited text based on the editing location, the editing manner, and the edited content.

After the notes application detects the user operation that triggers editing of the recognized text, in response to the user operation of editing the recognized text, the notes application may obtain a corresponding input event and input location, and a display area containing the input location may obtain a focus. Further, the notes application may determine the editing location based on the input location, and determine that text included in the display area containing the input location is the target edited text. The editing location can also be understood as a cursor location.

It can be understood that, if the notes application detects the user operation that triggers editing of the recognized text, the notes application may enter the editing state. In a subsequent process in which the user edits the recognized text, the notes application may continuously detect a corresponding user operation (for example, a user operation performed on a key in a keyboard), and in response to the corresponding user operation, the notes application may determine the editing manner (for example, deleting text or adding text) and the edited content. It can be understood that the edited content refers to text targeted by the corresponding editing manner, for example, text that needs to be deleted or added. The edited content may be some or all text in the target edited text, or may be other text to be added to the target edited text.

After determining the target edited text, the editing location, the editing manner, and the edited content in the foregoing manner, the notes application may edit the target edited text based on the editing location, the editing manner, and the edited content to obtain edited text, and send the edited text to the display screen for display.

For example, in response to a user operation of tapping the second speaker text display area 1031 shown in (1) in FIG. 6E, the notes application may determine the cursor location and the target edited text. As shown in FIG. 6F, the cursor location is between "6" and "9" in the text included in the second speaker text display area 1031, and the target edited text is the text included in the second speaker text display area 1031, namely, "abcde3336666999". Further, the notes application may receive a user operation of tapping the delete key 161 shown in FIG. 6F. After receiving the user operation of tapping the delete key 161, the notes application may determine that the editing manner is deletion, and determine that the edited content is the numeral "6" on the left side of the cursor. Correspondingly, the notes application may delete the numeral "6" in the text included in the second speaker text display area 1031 to obtain edited text "abcde333666999", and send the edited text to the display screen for display. As shown in FIG. 6G, the display screen may display the edited text, namely, "abcde333666999", in the second speaker text display area 1031.

In some embodiments of this application, after determining the input location, the notes application may determine an object (for example, the second speech recognition object) corresponding to the display area (for example, the second speaker text display area 1031) containing the input location, and determine that text data in the object is the target edited text. In this case, after editing the target edited text based on the editing location, the editing manner, and the edited content and obtaining the edited text, the notes application may write the edited text into the object, and send the text data in the object to the display screen for display.

It can be understood that a sequence of performing S302 and S307 is not limited in this application.

S308: If the notes application is in the editing state and detects no user operation in T1, or detects a user operation performed on a non-editing area, the notes application sets the flag to "false".

It can be understood that a specific value of T1 may be set depending on an actual requirement. This is not limited in this application. For example, T1 may be 10 seconds.

It can be understood that, the non-editing area may include an area other than a display area in which recognized text is located (for example, the recognized text display area 130) and a display area in which the keyboard is located (for example, a display area in which the keyboard 16 is located, as shown in FIG. 6G). For example, the non-editing area may include the blank area shown in FIG. 6H.

It can be understood that the foregoing condition for triggering the notes application to set the flag to "false" is merely an example provided in this application, and should not be considered as any limitation on this application.

Optionally, after the electronic device performs step S308, at least one of step S401 to step S405 may be further performed.

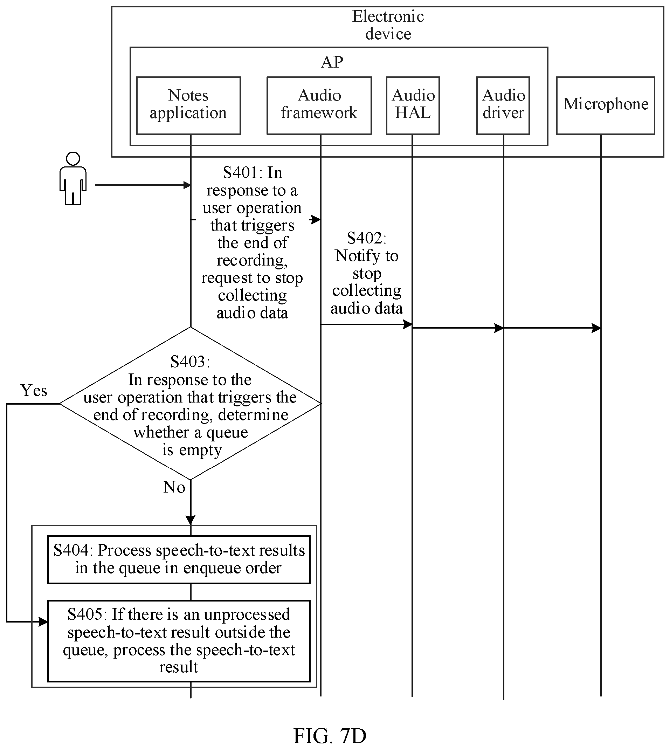

4. After editing is completed, process the speech-to-text result and the newly received speech-to-text result in the queue (as shown in FIG. 7D).

S401: In response to a user operation that triggers the end of recording, the notes application requests the audio framework to stop collecting audio data.

The user may trigger the end of recording in the notes application. For example, as shown in FIG. E, the user may trigger the end of recording by tapping the stop recording control 101. Correspondingly, the notes application may receive the user operation of tapping the stop recording control 101.

Certainly, the user may alternatively trigger, in another manner (for example, gesture or voice control), the notes application to end recording. This is not limited in this application.

After the notes application detects the user operation that triggers the end of recording, in response to the user operation that triggers the end of recording, the notes application may request the audio framework to stop collecting audio data.

In some embodiments of this application, in response to the user operation that triggers the stop of recording, the notes application may use a stopRecording() method to stop recording.

S402: The audio framework notifies, via the audio HAL and the audio driver, the microphone to stop collecting audio data.

After the notes application may request the audio framework to stop collecting audio data, the audio framework may notify, via the audio HAL and the audio driver, the microphone to stop collecting audio data.

Correspondingly, the microphone may receive an audio data collection stop notification transmitted by the audio framework via the audio HAL and the audio driver.

S403: In response to the user operation that triggers the end of recording, the notes application determines whether the queue is empty.

After the notes application detects the user operation that triggers the end of recording, in response to the user operation that triggers the end of recording, the notes application may determine whether the queue is empty. If the queue is not empty, the notes application may perform step S404 and step S405, and if the queue is empty, the notes application may perform only step S405.

S404: The notes application processes the speech-to-text results in the queue in enqueue order.

If the queue is not empty after the notes application stops recording, the notes application may process the speech-to-text results in the queue in enqueue order of the speech-to-text results in the queue. For a specific implementation thereof, refer to related descriptions in step S213. Details are not described herein again in this application.

S405: If there is an unprocessed speech-to-text result outside the queue, the notes application processes the speech-to-text result.

It can be understood that, if the queue is empty and there is still an unprocessed speech-to-text result outside the queue, the notes application may process the speech-to-text result outside the queue. For a specific implementation thereof, refer to step S204 to step S212. Details are not described herein again in this application.

If the queue is not empty and there is still an unprocessed speech-to-text result outside the queue, the notes application may first process the speech-to-text result in the queue; and after the processing is completed, process the speech-to-text result outside the queue. For a specific implementation thereof, refer to related descriptions in step S213. Details are not described herein again in this application.

Based on the foregoing display method provided in embodiments of this application, the electronic device can implement editing of recognized text in an ASR process without losing user-edited content and recognized content in an editing process.

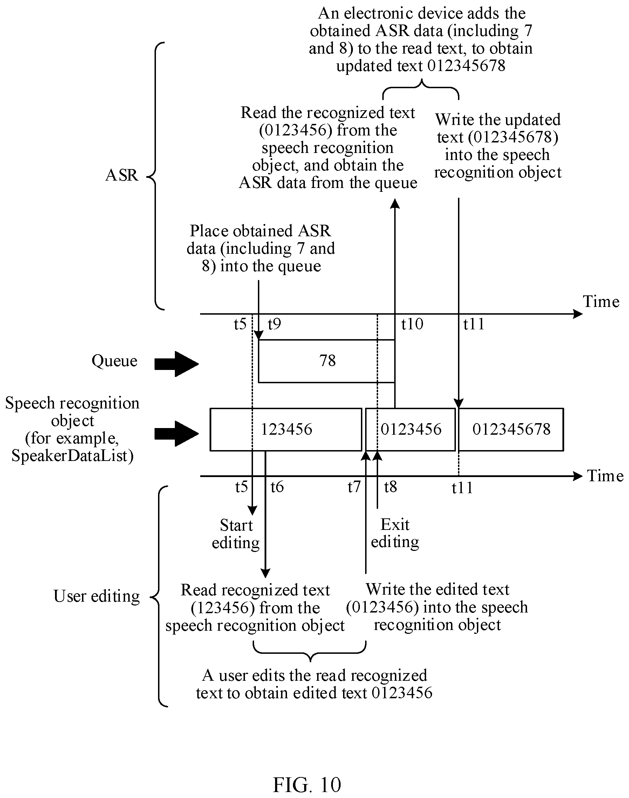

For example, as shown in FIG. 10, originally stored text (that is, recognized text) in a speech recognition object is 123456. The user may tap a corresponding area on the display screen to edit the recognized text. In response to the tap operation, at a moment t5, the electronic device may start editing (or enter an editing state). After the electronic device starts editing, at a moment t6, the electronic device may read the recognized text, namely, 123456, from the speech recognition object. The user may edit the recognized text, for example, add a numeral 0 before the recognized text. Correspondingly, the electronic device may obtain edited text, namely, 0123456, and write the edited text into the speech recognition object at a moment t7. In other words, from the moment t7, the recognized text in the speech recognition object changes to 0123456. After the user completes the foregoing editing, editing may be exited at a moment t8. It should be noted that, after the electronic device starts editing, at a moment t9, the electronic device may place ASR data obtained by the electronic device into a queue, for example, place obtained 7 and 8 into the queue. The electronic device does not process data in the queue until editing is exited at the moment t8. After the electronic device exits editing, at a moment t10, the electronic device may read the recognized text (namely, 0123456) from the speech recognition object, obtain the ASR data (including 7 and 8) from the queue, and add the obtained ASR data to the read recognized text, to obtain updated text, namely, 012345678. Further, at a moment t11, the electronic device may write the updated text into the speech recognition object. In this case, the text in the speech recognition object changes from 0123456 to 012345678. In this way, the electronic device can ensure that ASR and user editing do not interfere with each other: User editing does not cause a loss of ASR data obtained by the electronic device, and processing of the ASR data does not cause a loss of user-edited content.

It should be noted that, according to the display method provided in embodiments of this application, in the electronic device, an thread responsible for ASR operates on an object (an object for storing recognized text) frequently and sequentially, while an thread responsible for user editing operates on the object (the object for storing the recognized text) only when ta user triggers editing, that is, operates on the object occasionally and in an unordered manner. In a process in which the thread responsible for user editing operates on the object for storing the recognized text, the electronic device may place, into a queue, a to-be-processed event (namely, ASR data) that is of the thread responsible for ASR and that is targeted for the object for storing the recognized text. After the thread responsible for user editing completes an operation on the object for storing the recognized text, if there is ASR data in the queue, the electronic device first processes the ASR data in the queue by using the thread responsible for ASR; and after the processing is completed, operates, by using the thread responsible for ASR, on the object for storing the recognized text. In contrast, if there is no ASR data in the queue, the electronic device operates, by using the thread responsible for ASR, on the object for storing the recognized text, that is, writes text included in newly received ASR data into the object for storing the recognized text.

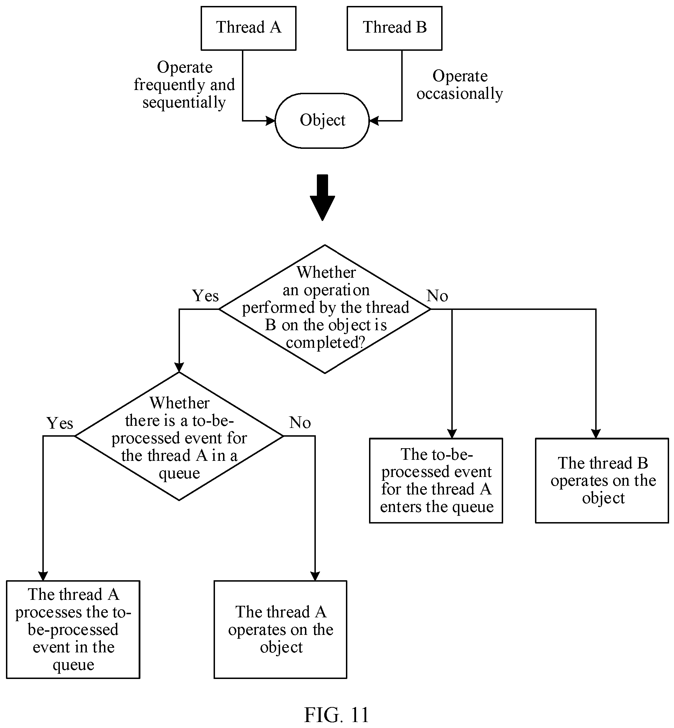

It can be understood that according to the foregoing method, as shown in FIG. 11, when two threads of the electronic device jointly operate on a same object (where a thread A operates frequently and sequentially, and a thread B operates occasionally and in an unordered manner), the electronic device may place a to-be-processed event of the thread A for the object into a queue in a process in which the thread B operates on the object. After an operation performed by the thread B on the object is completed, if there is a to-be-processed event of the thread A for the object in the queue, the electronic device first processes the to-be-processed event in the queue by using the thread A; and after the processing is completed, operates on the object by using the thread A. In contrast, if there is no to-be-processed event of the thread A for the object in the queue, the electronic device operates on the object by using the thread A.

It can be understood that, the thread A may be alternatively a thread other than the thread responsible for ASR, and the thread B may be alternatively a thread other than the thread responsible for user editing. The thread A and the thread B are not specifically limited in this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A display method, applied to a first device, wherein the method comprises:
displaying a first interface, wherein the first interface comprises a first control;
displaying a second interface in response to a first operation performed on the first control, and starting recording after the first operation is performed;
obtaining, in a first time period, first audio data obtained by recording, wherein first text content corresponding to the first audio data is displayed in a first display area of the second interface, and the first display area does not comprise a cursor in the first time period;
after the first time period, displaying the cursor in the first display area in response to a second operation performed on the first display area;
receiving an editing operation after the second operation is performed, wherein the first text content modified by performing the editing operation is displayed in the first display area; and
after the second operation is performed, obtaining second audio data obtained by recording, wherein second text content corresponding to the second audio data is not displayed in the first display area.

2. The method according to claim 1, wherein the second interface comprises a second display area, and the second text content is displayed in the second display area after the second operation is performed.

3. The method according to claim 1 or 2, wherein the method further comprises:
in response to an edit-exit event, displaying the second text content and the modified first text content in the first display area, and skipping displaying the cursor in the first display area after the edit-exit event.

4. The method according to any one of claims 1 to 3, wherein the second interface comprises a second control, and the starting recording after the first operation is performed comprises:
starting recording in response to the first operation; and
the obtaining, in a first time period, first audio data obtained by recording comprises:
obtaining the first audio data and the first text content in the first time period in response to a third operation performed on the second control.

5. The method according to claim 2, wherein after the obtaining first audio data obtained by recording, the method further comprises:
sending the first audio data to a second device;
after sending the first audio data to the second device, receiving a plurality of audio recognition results sent by the second device, wherein text in a first-type audio recognition result comprised in the plurality of audio recognition results constitutes the first text content, and the plurality of audio recognition results comprise a first recognition result; and
processing the first recognition result after receiving the first recognition result, to obtain third text content, wherein when the first recognition result is a first-type audio recognition result, the third text content is displayed in the first display area, and the first text content comprises the third text content; or when the first recognition result is a second-type audio recognition result, the third text content replaces content originally displayed in the second display area; wherein
in a process of processing the first recognition result, a first flag is first content, and a first queue does not comprise the audio recognition results.

6. The method according to claim 5, wherein the method further comprises:
in response to the first operation, creating the first queue and setting the first flag as the first content.

7. The method according to claim 5 or 6, wherein after the obtaining second audio data obtained by recording, the method further comprises:
sending the second audio data to the second device; and
after sending the second audio data to the second device, receiving a plurality of audio recognition results sent by the second device, and processing the plurality of audio recognition results to obtain the second text content; wherein
each of the plurality of audio recognition results comprises a part or all of the second text content; the first flag is second content in a process of receiving the plurality of audio recognition results sent by the second device and processing the plurality of audio recognition results; and after the second audio data is sent to the second device and the plurality of audio recognition results sent by the second device are received, the first queue comprises the plurality of audio recognition results received after the second audio data is sent to the second device, or the first queue comprises a first-type audio recognition result in the plurality of audio recognition results received after the second audio data is sent to the second device.

8. The method according to claim 7, wherein the plurality of audio recognition results received after the second audio data is sent to the second device comprise a second recognition result and a third recognition result, the second recognition result and the third recognition result are first-type audio recognition results, a receiving moment of the second recognition result is earlier than a receiving moment of the third recognition result, the second recognition result comprises fourth text content, and the third recognition result comprises fifth text content; and
the receiving a plurality of audio recognition results sent by the second device, and processing the plurality of audio recognition results to obtain the second text content comprises:
receiving the second recognition result, and processing the second recognition result after receiving the second recognition result, to obtain the fourth text content, wherein the fourth text content is displayed in the second display area; and
receiving the third recognition result, and processing the third recognition result after receiving the third recognition result, to obtain the fifth text content, wherein the fifth text content and the fourth text content constitute the second text content, and then the second text content is displayed in the second display area.

9. The method according to claim 7, wherein the plurality of audio recognition results received after the second audio data is sent to the second device comprise a fourth recognition result and a fifth recognition result, a receiving moment of the fourth recognition result is earlier than a receiving moment of the fifth recognition result, the fourth recognition result comprises sixth text content, and the fifth recognition result comprises the second text content; and
the receiving a plurality of audio recognition results sent by the second device, and processing the plurality of audio recognition results to obtain the second text content comprises:
receiving the fourth recognition result, and processing the fourth recognition result after receiving the fourth recognition result, to obtain the sixth text content, wherein the sixth text content is displayed in the second display area; and
receiving the fifth recognition result, and processing the fifth recognition result after receiving the fifth recognition result, to obtain the second text content, wherein the second text content replaces the sixth text content and is displayed in the second display area.

10. The method according to claim 9, wherein the fourth recognition result and the fifth recognition result are first-type audio recognition results; the fourth recognition result and the fifth recognition result are the second-type audio recognition results; the fourth recognition result is a first-type audio recognition result, and the fifth recognition result is the second-type audio recognition result; or the fourth recognition result is the second-type audio recognition result, and the fifth recognition result is a first-type audio recognition result.

11. The method according to any one of claims 7 to 10, wherein after the first time period, the method further comprises:
setting the first flag to the second content in response to the second operation; and
after the obtaining the second text content, the method further comprises:
setting the first flag as the first content in response to an edit-exit event.

12. An electronic device, wherein the electronic device comprises one or more memories and one or more processors, the one or more memories are coupled to the one or more processors, the memory is configured to store computer program code, the computer program code comprises computer instructions, and the processor invokes the computer instructions to perform the method according to any one of claims 1 to 11.

13. A computer-readable storage medium, configured to store computer instructions, wherein when the computer instructions are run on an electronic device, the electronic device is enabled to perform the method according to any one of claims 1 to 11.
